# EUROPÄISCHE PATENTSCHRIFT

(11) **EP 1 966 284 B1**
(45) Veröffentlichungstag und Bekanntmachung des Hinweises auf die Patenterteilung: **17.04.2013**
(21) Anmeldenummer: 06829851.2
(22) Anmeldetag: 22.12.2006
(51) Int. Cl.: C08J 3/09, C08B 1/00, D01F 2/02

(54) **LÖSUNGSSYSTEM AUF DER BASIS GESCHMOLZENER IONISCHER FLÜSSIGKEITEN, DESSEN HERSTELLUNG SOWIE VERWENDUNG ZUR HERSTELLUNG REGENERIERTER KOHLENHYDRATE**
SOLVENT SYSTEM BASED ON MOLTEN IONIC LIQUIDS, ITS PRODUCTION AND USE FOR PRODUCING REGENERATED CARBOHYDRATES
SOLUTION A BASE DE LIQUIDES IONIQUES FONDUS, SA FABRICATION ET SON UTILISATION POUR LA FABRICATION D'HYDRATES DE CARBONE REGENERES

(30) Priorität: 23.12.2005 DE 102005062608; 01.08.2006 DE 102006035830
(43) Veröffentlichungstag der Anmeldung: 10.09.2008
(73) Patentinhaber: BASF SE, 67056 Ludwigshafen (DE)
(72) Erfinder: STEGMANN, Veit, 68167 Mannheim (DE); MASSONNE, Klemens, 67098 Bad Dürkheim (DE); MAASE, Matthias, Mendham, New Jersey 07945 (US); UERDINGEN, Eric, 67346 Speyer (DE); LUTZ, Michael, 67346 Speyer (DE); HERMANUTZ, Frank, 71229 Leonberg (DE); GAEHR, Frank, 73730 Esslingen (DE)
(86) Internationale Anmeldenummer: PCT/EP2006/012478
(87) Internationale Veröffentlichungsnummer: WO 2007/076979

(56) Entgegenhaltungen:
- WO-A-01/74906
- WO-A2-03/029329
- WO-A2-03/039719
- DE-A1-102004 027 196
- US-A- 2 339 012

## Beschreibung

Die Erfindung betrifft ein Verfahren zur Herstellung von regenerierter Stärke, regenerierter Cellulose und von regenerierten Derivaten von Stärke und Cellulose, unter Verwendung eines Lösungssystems, das Stärke, Cellulose und/oder Derivate von Stärke und Cellulose enthält, wobei das Lösungssystem auf einer geschmolzenen ionischen Flüssigkeit basiert und ein protisches Lösungsmittel oder ein Gemisch mehrerer protischer Lösungsmittel enthält.

Cellulose ist mit einem Anteil von etwa 700 Milliarden Tonnen am geschätzten Biomassevorrat von 1,5 Billionen Tonnen auf der Erde der wichtigste Vertreter in der Gruppe der organischen Biopolymere. Aus Holz und Baumwolle gewonnener Zellstoff, der einen sehr hohen Anteil an Cellulose enthält, ist zur Zeit die wichtigste Rohstoffbasis für die Herstellung von Papier, Pappe, Celluloseregeneratfasern und -folien.

Zur Verarbeitung von Cellulose wurden in der Vergangenheit einige Lösungsmittelsysteme entwickelt. Von größter technischer Bedeutung ist heute nach wie vor das bereits seit langem bekannte Viskose-Verfahren. Darin wird Cellulose zunächst zum Xanthogenat derivatisiert und dann in verdünnter Natronlauge aufgelöst. Durch Regeneration in speziellen Koagulationsbädern wird die Derivatisierung rückgängig und Cellulose so verfügbar gemacht. Verfahrensbedingt entstehen allerdings große Mengen an Salzen und schwefelhaltigen Abgasen, welche mit Hilfe nachsorgender Technologien behandelt werden müssen.

Im Zuge des zunehmenden Umweltbewusstseins der letzten Jahrzehnte wurden Entwicklungen zur Direktlösung von Cellulose mit geringerem Zwangsanfall an Abfällen und unerwünschten Emissionen forciert. Hier hat das Verfahren mit dem Lösungsmittel N-Methylmorpholin-N-oxid-mono-Hydrat (NMMO) derzeit die wichtigste technische Bedeutung erlangt. Nachteilig ist hierbei das enge Lösungsfenster im ternären System NMMO, Wasser und Cellulose, der Einsatz eines oxidierend wirkenden Lösungsmittels sowie die systembedingte Fibrillierung der hergestellten Produkte.

Ionische Flüssigkeiten können als Ersatz für konventionelle organische Lösungsmittel dienen. Sie sind bei niedrigen Temperaturen (< 100°C) schmelzende organische Salze, die eine neuartige Klasse von Lösungsmitteln mit nicht-molekularem, ionischem Charakter darstellen. Ionische Flüssigkeiten ohne substantielle Verunreinigungen besitzen keinen messbaren Dampfdruck. Je nach Wahl des Kations und Anions kann ihre Polarität und damit ihre Eigenschaft als Lösungsmittel eingestellt werden.

Die DE 10 2004 027 196 A1 beschreibt ein Verfahren zur Kristallisation von Polymeren und Biopolymeren, das dadurch gekennzeichnet ist, dass eines oder mehrere der verwendeten Lösemittel eine ionische Flüssigkeit ist.

Die WO 03/039719 A2 beschreibt ein Verfahren zur Abtrennung von Substanzen aus Lösungen mit einer ionischen Flüssigkeit unter Verwendung einer Membran.

Die WO 01/74906 A1 beschreibt ein Verfahren zur Herstellung von Formkörpern auf Basis von Cellulose, das dadurch gekennzeichnet ist, dass Cellulose in tertiär-Aminoxid-Piperidonaten gelöst, anschliessend verformt, koaguliert und das Lösungsmittel entfernt wird.

Die US-A-1 943 176 lehrt die Nutzung organischer Salze der Substanzklassen der N-Alkyl- bzw. N-Arylsubstituierten Pyridiniumchloride in Mischung mit stickstoffhaltigen Basen (z.B. Pyridin) zur Lösung underivatisierter Cellulose. Diese Erfindung hat allerdings nie technisch Bedeutung erlangt. Die US-A-2 339 012 beschreibt die Lösung von Cellulose mit ähnlich substituierten Pyridiniumhydroxiden in Mischung mit Wasser oder Alkoholen. Auch hier scheint eine technische Realisierung an einer Reihe ungünstiger technischer Voraussetzungen zur direkten Lösung von Cellulose (z.B. hohe Drücke) gescheitert zu sein.

Durch den Einsatz einer neuen Klasse ionischer Flüssigkeiten konnten die oben genannten Nachteile überwunden werden. In einer neuen Entwicklung beschreibt die WO 2003/029329 die Verwendung insbesondere von Imidazol-basierten ionischen Flüssigkeiten. Diese sind als flexible Lösungsmittel besonders für die direkte Lösung von Cellulose in Abwesenheit von Wasser und anderen stickstoffhaltigen organischen Basen geeignet. Nachteilig ist es, dass auf den Einsatz von Wasser bei der Lösungsherstellung verzichtet werden muss. Die Beimischung von mehr als 5 Gew.-% Wasser wird ausdrücklich ausgeschlossen. Da die ionischen Flüssigkeiten aus wirtschaftlichen sowie umwelttechnischen Überlegungen nahezu vollständig zurückgewonnen werden müssen und die Produktkonsolidierung vorwiegend im wässrigen Milieu erfolgt, stellt dies eine erhebliche Einschränkung dar, die bisher eine technische Umsetzung verhinderte. Gerade die destillative Abtrennung von Wassergehalten kleiner als 5 Gew.-% gestaltet sich als technisch schwierig, äußerst energieintensiv und damit als wirtschaftlich ineffizient.

Der vorliegenden Erfindung lag daher die Aufgabe zugrunde, die eingangs bezeichneten Lösungssysteme bzw. das angegebene Verfahren so weiterzubilden, dass es wirt-schaftlich und umweltfreundlich möglich ist, Biopolymere, insbesondere in Form von Stärke, von Cellulose sowie von Derivaten von Stärke und Cellulose, vorteilhaft zu regenerieren.

Diese Aufgabe wird durch die nachfolgend erläuterte Erfindung gelöst, die u.a. darin besteht, dass das Lösungssystem ein protisches Lösungsmittel oder ein Gemisch mehrerer protischer Lösungsmittel enthält, wobei für den Fall, dass das protische Lösungsmittel allein Wasser ist, dieses in dem Lösungssystem in einer Menge von mehr als etwa 5 Gew.-% vorliegt.

Gegenstand der Erfindung ist ein Verfahren zur Herstellung von regenerierter Stärke, regenerierter Cellulose und von regenerierten Derivaten von Stärke und Cellulose, unter Verwendung eines Lösungssystems, das Stärke, Cellulose und/oder Derivate von Stärke und Cellulose enthält, wobei das Lösungssystem auf einer geschmolzenen ionischen Flüssigkeit basiert und ein protisches Lösungsmittel oder ein Gemisch mehrerer protischer Lösungsmittel enthält, wobei für den Fall, dass das protische Lösungsmittel allein Wasser ist, dieses in dem Lösungssystem in einer Menge von mehr als 5 Gew.-% vorliegt, und wobei das Lösungssystem das protische Lösungsmittel, mit Ausnahme von Wasser, in einer Menge von mindestens 0,1 Gew.-% enthält, und das Lösungssystem als protische Lösungsmittel Methanol, Ethanol, 1-Propanol, 2-Propanol und/oder 1-Butanol, gegebenenfalls in Vermischung mit Wasser, enthält, wobei das Lösungssystem in ein Koagulationsmedium überführt wird, in dem sich ein Lösungsmittel befindet, das die Stärke, Cellulose und/oder Derivate von Stärke und Cellulose nicht löst und mit der geschmolzenen ionischen Flüssigkeit mischbar ist.

Wesentliches Kennzeichen ist demzufolge die Einbeziehung eines protischen Lösungsmittels in ein Lösungssystem für Stärh Cellusose und/oder Derivate von Stärke und Cellose wobei gegebenenfalls in dem Lösungssystem noch Zusatzstoffe enthalten sind. Der Stand der Technik, wie er in der WO 2003/029329 beschrieben ist, hat sich gegen die Einbeziehung protischer Lösungsmittel gewandt, insbesondere gegen die Einbeziehung von Wasser in einer Menge von mehr als 5 Gew.-%. So soll es danach insbesondere bevorzugt sein, die Wassermenge auf weniger als 1 Gew.-% zu beschränken. Im Rahmen der Erfindung wurde nun gefunden, dass für den gesamten Prozess der Regenerierung von Kohlenhydraten, insbesondere von Cellulose, die Einbeziehung von Wasser bzw. anderen protischen Lösungsmitteln von umfassendem Vorteil ist. Wenn im Rahmen der erfindungsgemäßen Lehre Wasser einbezogen wird, dann führt dies dazu, dass bei der Regenerierung in beispielsweise einem Koagulationsmedium (Fällmedium) aus Wasser die wertvolle ionische Flüssigkeit nicht mehr vollständig vom Wasser bzw. von dem protischen Lösungsmittel befreit werden muss, sondern das wiedergewonnene Lösungssystem noch Wasser in einer Menge von mehr als 5 Gew.-% enthalten kann, so dass eine vollständige Entfernung des Wassers unterbleiben kann. Dies bedeutet einen geringeren energetischen Aufwand und einen wesentlichen Vorteil.

Somit ist es Kerngedanke der Erfindung, dass entgegen der strikten Anweisung des Standes der Technik dem erfindungsgemäßen Lösungssystem gerade ein protisches Lösungsmittel in einer abgestimmten Menge zugesetzt wird, wobei für den Fall, dass das protische Lösungsmittel allein Wasser ist, dieses in dem Lösungssystem in einer Menge von mehr als 5 Gew.-% vorliegt. Das Wasser hat gegenüber anderen protischen Lösungsmitteln den Vorteil, das es sehr umweltfreundlich ist und die Viskosität der Lösung sowie die Strukturbildung bei der Produktkonsolidlerung positiv beeinflusst. Darüber hinaus ist das Wasser gegenüber vergleichbaren geeigneten protischen Lösungsmitteln sehr kostengünstig.

Der Grundgedanke, dass in einer ionischen Flüssigkeit, wie im Stand der Technik beschrieben, Cellulose regeneriert wird, bleibt demzufolge erfindungsgemäß erhalten. Allerdings wird der ionischen Flüssigkeit gerade ein flüssiges Nicht-Lösungsmittel für die Kohlenhydrate beigemischt, insbesondere für Cellulose, das mit der ionischen Flüssigkeit selbst mischbar ist, jedoch die Anhebung des Mischungsverhältnisses protisches Lösungsmittel/ionische Flüssigkeit in dem das Kohlenhydrat enthaltenden Lösungsmittel zur gewünschten Koagulation des Kohlenhydrats führt.

Im Falle des Einsatzes von Wasser als alleiniges protisches Lösungsmittel ist es bevorzugt, wenn dessen Menge in dem Lösungssystem mehr als 6 Gew.-% beträgt, insbesondere zwischen 6 und 15 Gew.-% liegt. Ganz besonders bevorzugt wird der Bereich von 7 bis 12 Gew.-% Wasser. Bei der Wahl der weiteren protischen Lösungsmittel, die im Einzelfall von Vorteil sein können, unterliegt der Fachmann keiner wesentlichen Beschränkung.

Dem Fachmann ist der Begriff "protisches Lösungsmittel" verständlich. Protische Lösungsmittel enthalten gemäß C. Reichardt, "Solvents and Solvent Effects in Organic Chemistry", 3rd edition, S. 82 - 84, 2003, Wiley-VCH, Weinheim, Wasserstoffatome, welche an elektronegative Elemente gebunden sind. Typische Beispiele hierfür sind neben Wasser, Alkohole, Amine (unter Aminen sind aliphatische und cycloaliphatische Amine zu verstehen), Säureamide und Carbonsäuren. Dabei handelt es sich Erfindungsgemäβ um Methanol, Ethanol, 1-Propanol, 2-Propanol und/oder 1-Butanol. Erfindungsgemäß liegt der Alkohol, in dem Lösungssystem in einer Menge von mindestens etwa 0,1 Gew.-%, insbesondere von mindestens etwa 1 Ges.-%, vor. Ganz besonders bevorzugt ist es, wenn das protische Lösungsmittel, insbesondere der Alkohol, in einer Menge von etwa 1 bis 10 Gew.-%, insbesondere in einer Menge von etwa 2 bis 5 Gew.-% in dem Lösungssystem enthalten ist. Die protischen Lösungsmittel können, was im Einzelfall von Vorteil sein kann, gemischt eingesetzt werden. Dies gilt insbesondere für die Zumischung von Wasser im Falle von Alkoholen.

Bezüglich der Wahl der ionischen Flüssigkeiten zur Verwirklichung der vorliegenden Erfindung unterliegt der Fachmann keinen wesentlichen Einschränkungen. Daher sollen für die Zwecke der Erfindung besonders geeignete ionische Flüssigkeiten wie folgt dargestellt werden:
Ionische Flüssigkeiten im Sinne der vorliegenden Erfindung sind vorzugsweise
   (A) Salze der allgemeinen Formel (I) 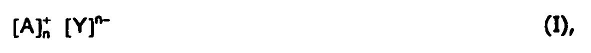 in der n für 1, 2, 3 oder 4 steht, [A]⁺ für ein quartäres Ammonium-Kation, ein Oxonium-Kation, ein Sulfonium-Kation oder ein Phosphonium-Kation und [Y]ⁿ⁻ für ein ein-, zwei-, drei- oder vierwertiges Anion steht;
   (B) gemischte Salze der allgemeinen Formeln (II)

      [A¹]⁺[A²]⁺ [Y]ⁿ⁻ (IIa),

      wobei n = 2;

      [A¹]⁺[A²⁺[A³]⁺ [Y]ⁿ⁻ (IIb),

      wobei n = 3; oder

      [A¹]⁺[A²]⁺[A³]⁺[A⁴]⁺ [Y]ⁿ⁻ (IIc),

      wobei n = 4 und
      wobei [A¹]⁺, [A²]⁺, [A³]⁺ und [A⁴]⁺ unabhängig voneinander aus den für [A]⁺ genannten Gruppen ausgewählt sind und [Y]ⁿ⁻ die unter (A) genannte Bedeutung besitzt.

Verbindungen, die sich zur Bildung des Kations [A]⁺ von ionischen Flüssigkeiten eignen, sind z.B. aus DE 102 02 838 A1 bekannt. So können solche Verbindungen Sauerstoff-, Phosphor-, Schwefel- oder insbesondere Stickstoffatome enthalten, beispielsweise mindestens ein Stickstoffatom, bevorzugt 1 bis 10 Stickstoffatome, besonders bevorzugt 1 bis 5, ganz besonders bevorzugt 1 bis 3 und insbesondere 1 bis 2 Stickstoffatome. Gegebenenfalls können auch weitere Heteroatome wie Sauerstoff- , Schwefel- oder Phosphoratome enthalten sein. Das Stickstoffatom ist ein geeigneter Träger der positiven Ladung im Kation der ionischen Flüssigkeit, von dem im Gleichgewicht dann ein Proton bzw. ein Alkylrest auf das Anion übergehen kann, um ein elektrisch neutrales Molekül zu erzeugen.

Für den Fall, dass das Stickstoffatom der Träger der positiven Ladung im Kation der ionischen Flüssigkeit ist, kann bei der Synthese der ionischen Flüssigkeiten zunächst durch Quaternisierung am Stickstoffatom etwa eines Amins oder Stickstoff-Heterocyclus' ein Kation erzeugt werden. Die Quaternisierung kann durch Alkylierung des Stickstoffatoms erfolgen. Je nach verwendetem Alkylierungsreagens werden Salze mit unterschiedlichen Anionen erhalten. In Fällen, in denen es nicht möglich ist, das gewünschte Anion bereits bei der Quaternisierung zu bilden, kann dies in einem weiteren Syntheseschritt erfolgen. Ausgehend beispielsweise von einem Ammoniumhalogenid kann das Halogenid mit einer Lewissäure umgesetzt werden, wobei aus Halogenid und Lewissäure ein komplexes Anion gebildet wird. Alternativ dazu ist der Austausch eines Halogenidions gegen das gewünschte Anion möglich. Dies kann durch Zugabe eines Metallsalzes unter Koagulation des gebildeten Metallhalogenids, über einen Ionenaustauscher oder durch Verdrängung des Halogenidions durch eine starke Säure (unter Freisetzung der Halogenwasserstoffsäure) geschehen. Geeignete Verfahren sind beispielsweise in Angew. Chem. 2000, 112, S. 3926 - 3945 und der darin zitierten Literatur beschrieben.

Geeignete Alkylreste, mit denen das Stickstoffatom in den Aminen oder Stickstoff-Heterocyclen beispielsweise quaternisiert sein kann, sind C₁-C₁₈-Alkyl, bevorzugt C₁-C₁₀-Alkyl, besonders bevorzugt C₁-C₆-Alkyl und ganz besonders bevorzugt Methyl. Die Alkylgruppe kann unsubstituiert sein oder einen oder mehrere gleiche oder verschiedene Substituenten aufweisen.

Bevorzugt sind solche Verbindungen, die mindestens einen fünf- bis sechsgliedrigen Heterocyclus, insbesondere einen fünfgliedrigen Heterocyclus, enthalten, der mindestens ein Stickstoffatom sowie gegebenenfalls ein Sauerstoff- oder Schwefelatom aufweist. Ebenfalls insbesonders bevorzugt sind solche Verbindungen, die mindestens einen fünf- bis sechsgliedrigen Heterocyclus enthalten, der ein, zwei oder drei Stickstoffatome und ein Schwefel- oder ein Sauerstoffatom aufweist, ganz besonders bevorzugt solche mit zwei Stickstoffatomen. Weiterhin bevorzugt sind aromatische Heterocyclen.

Besonders bevorzugte Verbindungen sind solche, die ein Molgewicht unter 1000 g/mol aufweisen, ganz besonders bevorzugt unter 500 g/mol und insbesondere unter 300 g/mol.

Weiterhin sind solche Kationen bevorzugt, die ausgewählt sind aus den Verbindungen der Formeln (IIIa) bis (IIIw), 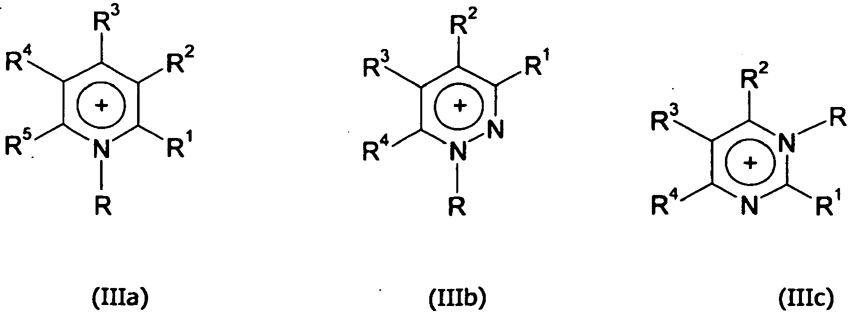 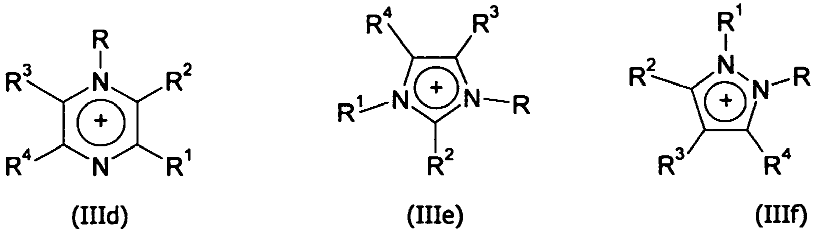 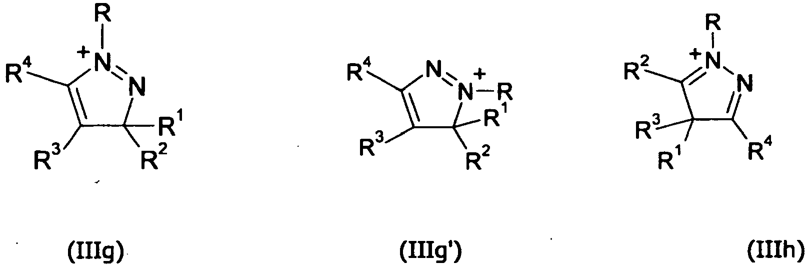 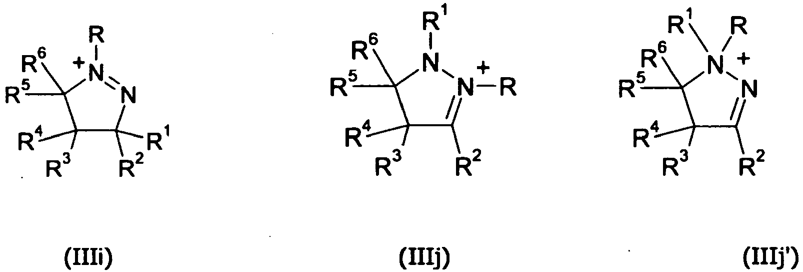 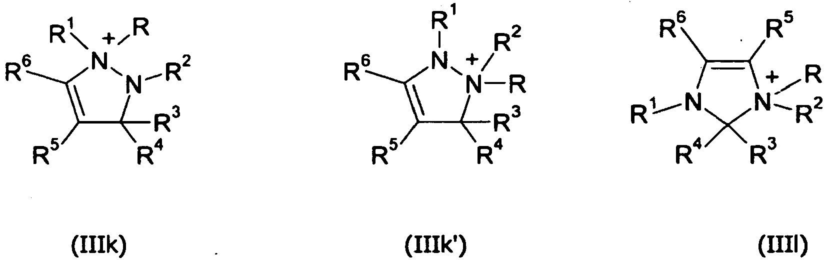 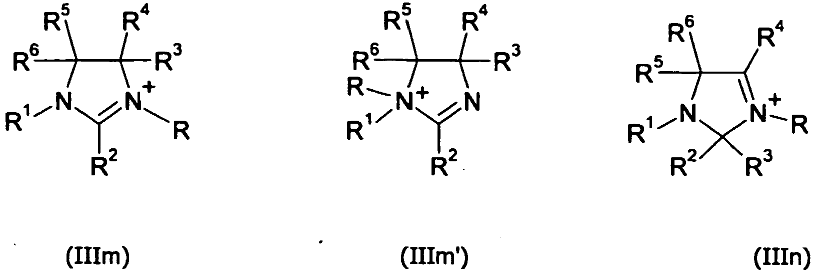 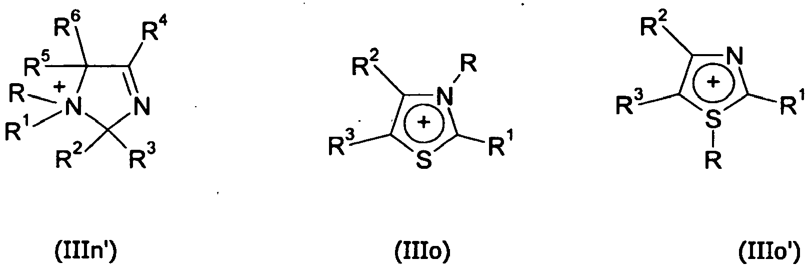 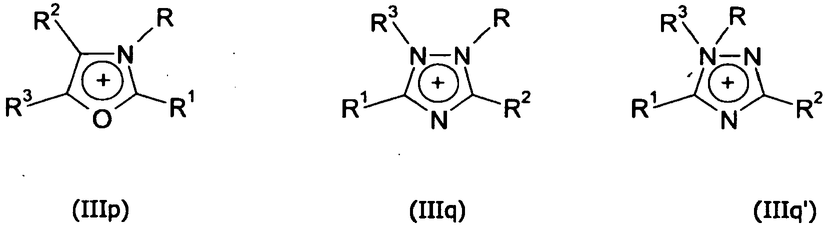 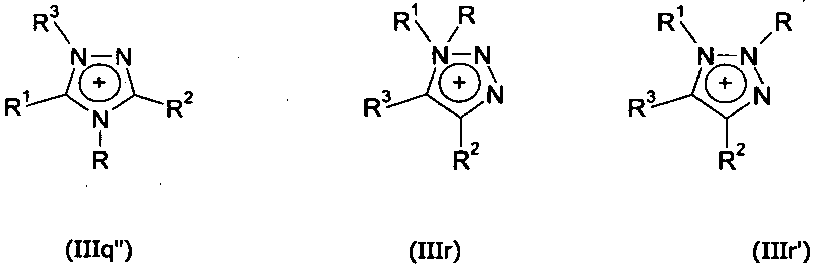 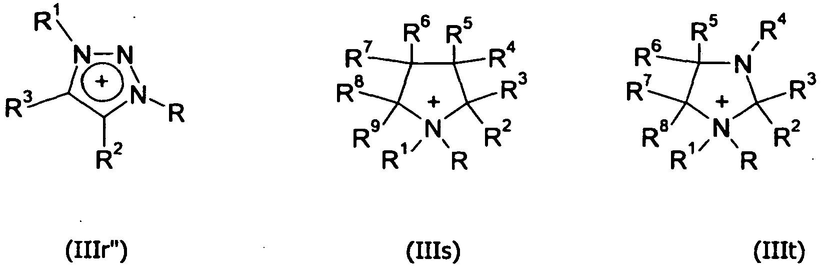 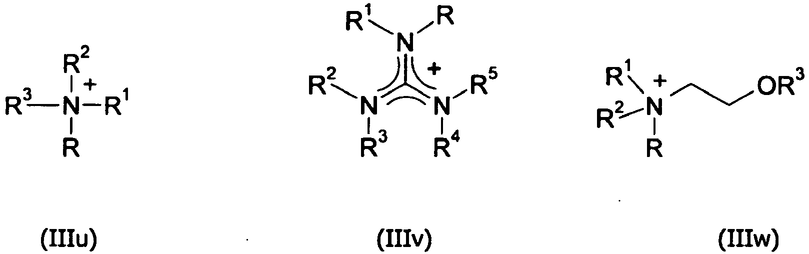 sowie Oligomere, die diese Strukturen enthalten.

Weitere geeignete Kationen sind Verbindungen der allgemeinen Formel (IIIx) und (II-Iy) 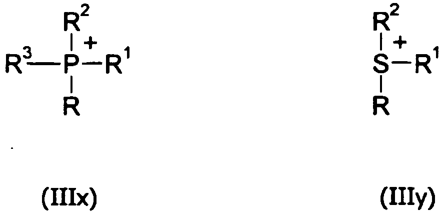 sowie Oligomere, die diese Struktur enthalten.

In den oben genannten Formeln (IIIa) bis (IIIy) stehen
• der Rest R für Wasserstoff, einen Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder funktionelle Gruppen unterbrochenen oder substituierten Rest mit 1 bis 20 Kohlenstoffatomen; und
• die Reste R¹ bis R⁹ unabhängig voneinander für Wasserstoff, eine Sulfo-Gruppe oder einen Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder funktionelle Gruppen unterbrochenen oder substituierten Rest mit 1 bis 20 Kohlenstoffatomen, wobei die Reste R¹ bis R⁹, welche in den oben genannten Formeln (III) an ein Kohlenstoffatom (und nicht an ein Heteroatom) gebunden sind, zusätzlich auch für Halogen oder eine funktionelle Gruppe stehen können; oder
   zwei benachbarte Reste aus der Reihe R¹ bis R⁹ zusammen auch für einen zweibindigen, Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder funktionelle Gruppen unterbrochenen oder substituierten Rest mit 1 bis 30 Kohlenstoffatomen.

Als Heteroatome kommen bei der Definition der Reste R und R¹ bis R⁹ prinzipiell alle Heteroatome in Frage, welche in der Lage sind, formell eine -CH₂-, eine -CH=, eine -C≡ oder eine =C= -Gruppe zu ersetzen. Enthält der Kohlenstoff enthaltende Rest Heteroatome, so sind Sauerstoff, Stickstoff, Schwefel, Phosphor und Silizium bevorzugt. Als bevorzugte Gruppen seien insbesondere -O-, -S-, -SO-, -SO₂-, -NR'-, -N=, -PR'-, - PR'₂ und -SiR'₂- genannt, wobei es sich bei den Resten R' um den verbleibenden Teil des Kohlenstoff enthaltenden Rests handelt. Die Reste R¹ bis R⁹ können dabei in den Fällen, in denen diese in den oben genannten Formeln (III) an ein Kohlenstoffatom (und nicht an ein Heteroatom) gebunden sind, auch direkt über das Heteroatom gebunden sein.

Als funktionelle Gruppen kommen prinzipiell alle funktionellen Gruppen in Frage, welche an ein Kohlenstoffatom oder ein Heteroatom gebunden sein können. Als geeignete Beispiele seien -OH (Hydroxy), =O (insbesondere als Carbonylgruppe), -NH₂ (Amino), - NHR, -NR₂, =NH (Imino), -COOH (Carboxy), -CONH₂ (Carboxamid), -SO₃H (Sulfo) und -CN (Cyano) genannt, insbesondere -OH (Hydroxy), =O (insbesondere als Carbonylgruppe), -NH₂ (Amino), =NH (Imino), -COOH (Carboxy), -CONH₂ (Carboxamid), -SO₃H (Sulfo) und -CN (Cyano). Funktionelle Gruppen und Heteroatome können auch direkt benachbart sein, so dass auch Kombinationen aus mehreren benachbarten Atomen, wie etwa -O- (Ether), -S- (Thioether), -COO- (Ester), -CONH- (sekundäres Amid) oder - CONR'- (tertiäres Amid), mit umfasst sind, beispielsweise Di-(C₁-C₄-Alkyl)-amino, C₁-C₄-Alkyloxycarbonyl oder C₁-C₄-Alkyloxy.

Als Halogene seien Fluor, Chlor, Brom und Iod genannt.

Bevorzugt steht der Rest R für
• unverzweigtes oder verzweigtes, unsubstituiertes oder ein bis mehrfach mit Hydroxy, Halogen, Phenyl, Cyano, C₁- C₆-Alkoxycarbonyl und/oder SO₃H substituiertes C₁-C₁₈-Alkyl mit insgesamt 1 bis 20 Kohlenstoffatomen, wie beispielsweise Methyl, Ethyl, 1-Propyl, 2-Propyl, 1-Butyl, 2-Butyl, 2-Methyl-1-propyl, 2-Methyl-2-propyl, 1-Pentyl, 2-Pentyl, 3-Pentyl, 2-Methyl-1-butyl, 3-Methyl-1-butyl, 2-Methyl-2-butyl; 3-Methyl-2-butyl, 2,2-Dimethyl1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, 1-Heptyl, 1-Octyl, 1-Nonyl, 1-Decyl, 1-Undecyl, 1-Dodecyl, 1-Tetradecyl, 1-Hexadecyl, 1-Octadecyl, 2-Hydroxyethyl, Benzyl, 3-Phenylpropyl, 2-Cyanoethyl, 2-(Methoxycar-bonyl)-ethyl, 2-(Ethoxycarbonyl)-ethyl, 2-(n-Butoxy-carbonyl)-ethyl, Trifluormethyl, Difluormethyl, Fluormethyl, Pentafluorethyl, Heptafluorpropyl, Heptafluorisopropyl, Nonafluorbutyl, Nonafluorisobutyl, Undecylfluorpentyl, Undecylfluorisopentyl, 6-Hydroxyhexyl und Propylsulfonsäure;
• Glykole, Butylenglykole und deren Oligomere mit 1 bis 100 Einheiten und einem Wasserstoff oder einem C₁-C₈-Alkyl als Endgruppe, wie beispielsweise R^{A}O-(CHR^{B}-CH₂-O)ₘ CHR^{B}-CH₂- oder R^{A}O-(CH₂CH₂CH₂CH₂O)ₘ-CH₂CH₂CH₂CH₂O-mit R^{A} und R^{B} bevorzugt Wasserstoff, Methyl oder Ethyl und m bevorzugt 0 bis 3, insbesondere 3-Oxabutyl, 3-Oxapentyl, 3,6-Dioxaheptyl, 3,6-Dioxaoctyl, 3,6,9-Trioxadecyl, 3,6,9-Trioxaundecyl, 3,6,9,12-Tetraoxatridecyl und 3,6,9,12-Tetraoxatetradecyl;
• Vinyl; und
• Allyl
• N,N-Di-C₁-C₆-alkyl-amino, wie beispielsweise N,N-Dimethylamino und N,N-Diethyl-amino.

Besonders bevorzugt steht der Rest R für unverzweigtes und unsubstituiertes C₁-C₁₈-Alkyl, wie beispielsweise Methyl, Ethyl, Allyl, 1-Propyl, 1-Butyl, 1-Pentyl, 1-Hexyl, 1-Heptyl, 1-Octyl, 1-Decyl, 1-Dodecyl, 1-Tetradecyl, 1-Hexadecyl, 1-Octadecyl, insbesondere für Methyl, Ethyl, 1-Butyl und 1-Octyl sowie für CH₃O-(CH₂CH₂O)ₘ-CH₂CH₂- und CH₃CH₂O-(CH₂CH₂O)ₘ-CH₂CH₂- mit m gleich 0 bis 3.

Bevorzugt stehen die Reste R¹ bis R⁹ unabhängig voneinander für
• Wasserstoff;
• Halogen;
• eine funktionelle Gruppe;
• gegebenenfalls durch funktionelle Gruppen, Aryl, Alkyl, Aryloxy, Alkyloxy, Halogen, Heteroatome und/oder Heterocyclen substituiertes und/oder durch ein oder mehrere Sauerstoff- und/oder Schwefelatome und/oder ein oder mehrere substituierte oder unsubstituierte Iminogruppen unterbrochenes C₁-C₁₈-Alkyl;
• gegebenenfalls durch funktionelle Gruppen, Aryl, Alkyl, Aryloxy, Alkyloxy, Halogen, Heteroatome und/oder Heterocyclen substituiertes und/oder durch ein oder mehrere Sauerstoff- und/oder Schwefelatome und/oder ein oder mehrere substituierte oder unsubstituierte Iminogruppen unterbrochenes C₂-C₁₈-Alkenyl;
• gegebenenfalls durch funktionelle Gruppen, Aryl, Alkyl, Aryloxy, Alkyloxy, Halogen, Heteroatome und/oder Heterocyclen substituiertes C₆-C₁₂-Aryl;
• gegebenenfalls durch funktionelle Gruppen, Aryl, Alkyl, Aryloxy, Alkyloxy, Halogen, Heteroatome und/oder Heterocyclen substituiertes C₅-C₁₂-Cycloalkyl;
• gegebenenfalls durch funktionelle Gruppen, Aryl, Alkyl, Aryloxy, Alkyloxy, Halogen, Heteroatome und/oder Heterocyclen substituiertes C₅-C₁₂-Cycloalkenyl; oder
• einen gegebenenfalls durch funktionelle Gruppen, Aryl, Alkyl, Aryloxy, Alkyloxy, Halogen, Heteroatome und/oder Heterocyclen substituierten fünf- bis sechsgliedrigen, Sauerstoff-, Stickstoff- und/oder Schwefelatome aufweisenden Heterocyclus bedeuten; oder
zwei benachbarte Reste zusammen für
• einen ungesättigten, gesättigten oder aromatischen, gegebenenfalls durch funktionelle Gruppen, Aryl, Alkyl, Aryloxy, Alkyloxy, Halogen, Heteroatome und/oder Heterocyclen substituierten und gegebenenfalls durch ein oder mehrere Sauerstoff- und/ oder Schwefelatome und/oder ein oder mehrere substituierte oder unsubstituierte Iminogruppen unterbrochenen Ring.

Bei gegebenenfalls durch funktionelle Gruppen, Aryl, Alkyl, Aryloxy, Alkyloxy, Halogen, Heteroatome und/oder Heterocyclen substituiertem C₁- C₁₈-Alkyl handelt es sich bevorzugt um Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, Heptyl, Octyl, 2-Etylhexyl, 2,4,4-Trimethylpentyl, 1,1,3,3-Tetrame-thylbutyl, 1-Nonyl, 1-Decyl, 1-Undecyl, 1-Dodecyl, 1-Tridecyl, 1-Tetradecyl, 1-Pentadecyl, 1-Hexadecyl, 1-Heptadecyl, 1-Octadecyl, Cyclopentylmethyl, 2-Cyclopentylethyl, 3-Cyclo-pentylpropyl, Cyclohexylmethyl, 2-Cyclohexylethyl, 3-Cyclohexylpropyl, Benzyl (Phenylmethyl), Diphenylmethyl (Benzhydryl), Triphenylmethyl, 1-Phenylethyl, 2-Phenylethyl, 3-Phenylpropyl, α,α-Dimethylbenzyl, p-Tolylmethyl, 1-(p-Butylphenyl)-ethyl, p-Chlorbenzyl, 2,4-Dichlorbenzyl, p-Methoxybenzyl, m-Ethoxybenzyl, 2-Cyanoethyl, 2-Cyanopropyl, 2-Methoxycarbonylethyl, 2-Ethoxycarbonylethyl, 2-Butoxycarbonylpropyl, 1,2-Di-(methoxy-carbonyl)-ethyl, Methoxy, Ethoxy, Formyl, 1,3-Dioxolan-2-yl, 1,3-Dioxan-2-yl, 2-Methyl-1,3-dioxolan-2-yl, 4-Methyl-1,3-dioxolan-2-yl, 2-Hydroxyethyl, 2-Hydroxypropyl, 3-Hydro-xypropyl, 4-Hydroxybutyl, 6-Hydroxyhexyl, 2-Aminoethyl, 2-Aminopropyl, 3-Aminopropyl, 4-Aminobutyl, 6-Aminohexyl, 2-Methylaminoethyl, 2-Methylaminopropyl, 3-Methylaminopropyl, 4-Methylaminobutyl, 6-Methylaminohexyl, 2-Dimethylaminoethyl, 2-Dimethylaminopropyl, 3-Dimethylaminopropyl, 4-Dimethylaminobutyl, 6-Dimethylaminohexyl, 2-Hydroxy-2,2-dimethylethyl, 2-Phenoxyethyl, 2-Phenoxypropyl, 3-Phenoxypropyl, 4-Phenoxybutyl, 6-Phenoxyhexyl, 2-Methoxyethyl, 2-Methoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl, 6-Ethoxyhexyl, Acetyl, CₘF₂₍ₘ₋ₐ₎₊₍₁₊₎H_{2a+b} mit m gleich 1 bis 30, 0≤a≤m und b = 0 oder 1 (beispielsweise CF₃, C₂F₅, CH₂CH₂-C₍ₘ₋₂₎F₂₍ₘ₋₂₎₊₁, C₆F₁₃, C₈F₁₇, C₁₀F₂₅, C₁₂F₂₅), Chlormethyl, 2-Chlorethyl, Trichlormethyl, 1,1-Dimethyl-2-chlorethyl, Methoxymethyl, 2-Butoxyethyl, Diethoxymethyl, Diethoxyethyl, 2-Isopropoxyethyl, 2-Butoxypropyl, 2-Octyloxyethyl, 2-Methoxyisopropyl, 2-(Methoxycarbonyl)-ethyl, 2-(Ethoxycarbonyl)-ethyl, 2-(n-Butoxycarbonyl)-ethyl, Butylthiomethyl, 2-Dodecylthioethyl, 2-Phenylthioethyl, 5-Hydroxy-3-oxa-pentyl, 8-Hydroxy-3,6-dioxa-octyl, 11-Hydroxy-3,6,9-trioxaundecyl, 7-Hydroxy-4-oxa-heptyl, 11-Hydroxy-4,8-dioxa-undecyl, 15-Hydroxy-4,8,12-trioxa-penta-decyl, 9-Hydroxy-5-oxa-nonyl, 14-Hydroxy-5,10-dioxa-tetradecyl, 5-Methoxy-3-oxa-pentyl, 8-Methoxy-3,6-dioxa-octyl, 11-Methoxy-3,6,9-trioxa-undecyl, 7-Methoxy-4-oxa-heptyl, 11-Methoxy-4,8-dioxa-undecyl, 15-Methoxy-4,8,12-trioxa-pentadecyl, 9-Methoxy-5-oxa-no-nyl, 14-Methoxy-5,10-dioxa-tetradecyl, 5-Ethoxy-3-oxapentyl, 8-Ethoxy-3,6-dioxa-octyl, 11-Ethoxy-3,6,9-trioxa-undecyl, 7-Ethoxy-4-oxa-heptyl, 11-Ethoxy-4,8-dioxa-undecyl, 15-Ethoxy-4,8,12-trioxa-pentadecyl, 9-Ethoxy-5-oxa-nonyl oder 14-Ethoxy-5,10-oxa-tetra-decyl.

Bei gegebenenfalls durch funktionelle Gruppen, Aryl, Alkyl, Aryloxy, Alkyloxy, Halogen, Heteroatome und/oder Heterocyclen substituiertes und/oder durch ein oder mehrere Sauerstoff- und/oder Schwefelatome und/oder ein oder mehrere substituierte oder unsubstituierte Iminogruppen unterbrochenes C₂-C₁₈-Alkenyl handelt es sich bevorzugt um Vinyl, 2-Propenyl, 3-Butenyl, cis-2-Butenyl, trans-2-Butenyl oder CₘF_{2(m-a)-(1-b)}H_{2a-b} mit m ≤ 30, 0 ≤ a ≤ m und b = 0 oder 1.

Bei gegebenenfalls durch funktionelle Gruppen, Aryl, Alkyl, Aryloxy, Alkyloxy, Halogen, Heteroatome und/oder Heterocyclen substituiertes C₆- C₁₂-Aryl handelt es sich bevorzugt um Phenyl, Tolyl, Xylyl, α-Naphthyl, β-Naphthyl, 4-Diphenylyl, Chlorphenyl, Dichlorphenyl, Trichlorphenyl, Difluorphenyl, Methylphenyl, Dimethylphenyl, Trimethylphenyl, Methylphenyl, Diethylphenyl, iso-Propylphenyl, tert.-Butylphenyl, Dodecylphenyl, Methoxyphenyl, Dimethoxyphenyl, Ethoxyphenyl, Hexyloxyphenyl, Methylnaphthyl, Isopropylnaphthyl, Chlornaphthyl, Ethoxynaphthyl, 2,6-Dimethylphenyl, 2,4,6-Trimethylphenyl, 2,6-Dimethoxyphenyl, 2,6-Dichlorphenyl, 4-Bromphenyl, 2-Nitrophenyl, 4-Nitrophenyl, 2,4-Dinitrophenyl, 2,6-Dinitrophenyl, 4-Dimethylaminophenyl, 4-Acetylphenyl, Methoxyethylphenyl, Ethoxymethylphenyl, Methylthiophenyl, Isopropylthiophenyl oder tert.-Butylthiophenyl oder C₆F₍₅₋ₐ₎Hₐ mit 0≤a≤5.

Bei gegebenenfalls durch funktionelle Gruppen, Aryl, Alkyl, Aryloxy, Alkyloxy, Halogen, Heteroatome und/oder Heterocyclen substituiertes C₅-C₁₂-Cycloalkyl handelt es sich bevorzugt um Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, Methoxycyclohexyl, Dimethoxycyclohexyl, Diethoxycyclohexyl, Butylthiocyclohexyl, Chlorcyclohexyl, Dichlorcyclohexyl, Dichlorcyclopentyl, CₘF_{2(m-a)-(1-b)}H_{2a-b} mit m≤30, 0≤a≤m und b = 0 oder 1 sowie ein gesättigtes oder ungesättigtes bicyclisches System wie z.B. Norbomyl oder Norbomenyl.

Bei gegebenenfalls durch funktionelle Gruppen, Aryl, Alkyl, Aryloxy, Alkyloxy, Halogen, Heteroatome und/oder Heterocyclen substituiertes C₅-C₁₂-Cycloalkenyl handelt es sich bevorzugt um 3-Cyclopentenyl, 2-Cyclohexenyl, 3-Cyclohexenyl, 2,5-Cyclohexadienyl oder CₙF_{2(m-a)-3(1-b)}H_{2a-3b} mit m ≤ 30, 0≤a≤m und b = 0 oder 1.

Bei einen gegebenenfalls durch funktionelle Gruppen, Aryl, Alkyl, Aryloxy, Alkyloxy, Halogen, Heteroatome und/oder Heterocyclen substituierten fünf- bis sechsgliedrigen, Sauerstoff-, Stickstoff- und/oder Schwefelatome aufweisenden Heterocyclus handelt es sich bevorzugt um Furyl, Thiophenyl, Pyrryl, Pyridyl, Indolyl, Benzoxazolyl, Dioxolyl, Dioxyl, Benzimidazolyl, Benzthiazolyl, Dimethylpyridyl, Methylchinolyl, Dimethylpyrryl, Methoxyfuryl, Dimethoxypyridyl oder Difluorpyridyl.

Bilden zwei benachbarte Reste gemeinsam einen ungesättigten, gesättigten oder aromatischen, gegebenenfalls durch funktionelle Gruppen, Aryl, Alkyl, Aryloxy, Alkyloxy, Halogen, Heteroatome und/oder Heterocyclen substituierten und gegebenenfalls durch ein oder mehrere Sauerstoff- und/oder Schwefelatome und/oder ein oder mehrere substituierte oder unsubstituierte Iminogruppen unterbrochenen Ring, so handelt es sich bevorzugt um 1,3-Propylen, 1,4-Butylen, 1,5-Pentylen, 2-Oxa-1,3-propylen, 1-Oxa-1,3-propylen, 2-Oxa-1,3-propylen, 1-Oxa-1,3-propenylen, 3-Oxa-1,5-pentylen, 1-Aza-1,3-propenylen, 1-C₁-C₄-Alkyl-1-aza-1,3-propenylen, 1,4-Buta-1,3-dienylen, 1-Aza-1,4-buta-1,3-dienylen oder 2-Aza-1,4-buta-1,3-dienylen.

Enthalten die oben genannten Reste Sauerstoff- und/oder Schwefelatome und/oder substituierte oder unsubstituierte Iminogruppen, so ist die Anzahl der Sauerstoff- und/oder Schwefelatome und/oder Iminogruppen nicht beschränkt. In der Regel beträgt sie nicht mehr als 5 in dem Rest, bevorzugt nicht mehr als 4 und ganz besonders bevorzugt nicht mehr als 3.

Enthalten die oben genannten Reste Heteroatome, so befinden sich zwischen zwei Heteroatomen in der Regel mindestens ein Kohlenstoffatom, bevorzugt mindestens zwei Kohlenstoffatome.

Besonders bevorzugt stehen die Reste R¹ bis R⁹ unabhängig voneinander für
• Wasserstoff;
• unverzweigtes oder verzweigtes, unsubstituiertes oder ein bis mehrfach mit Hydroxy, Halogen, Phenyl, Cyano, C₁-C₆-Alkoxycarbonyl und/oder SO₃H substituiertes C₁-C₁₈-Alkyl mit insgesamt 1 bis 20 Kohlenstoffatomen, wie beispielsweise Methyl, Ethyl, 1-Propyl, 2-Propyl, 1-Butyl, 2-Butyl, 2-Methyl-1-propyl, 2-Methyl-2-propyl, 1-Pentyl, 2-Pentyl, 3-Pentyl, 2-Methyl-1-butyl; 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, 1-Heptyl, 1-Octyl, 1-Nonyl, 1-Decyl, 1-Undecyl, 1-Dodecyl, 1-Tetradecyl, 1-Hexadecyl, 1-Octadecyl, 2-Hydroxyethyl, Benzyl, 3-Phenylpropyl, 2-Cyanoethyl, 2-(Methoxycar-bonyl)-ethyl, 2-(Ethoxycarbonyl)-ethyl, 2-(n-Butoxy-carbonyl)-ethyl, Trifluormethyl, Difluormethyl, Fluormethyl, Pentafluorethyl, Heptafluorpropyl, Heptafluorisopropyl, Nonafluorbutyl, Nonafluorisobutyl, Undecylfluorpentyl, Undecylfluorisopentyl, 6-Hydroxyhexyl und Propylsulfonsäure;
• Glykole, Butylenglykole und deren Oligomere mit 1 bis 100 Einheiten und einem Wasserstoff oder einem C₁- bis C₈-Alkyl als Endgruppe, wie beispielsweise R^{A}O-(CHR^{B}-CH₂-O)ₘ-CHR^{B}-CH₂- oder R^{A}O-(CH₂CH₂CH₂CH₂O)ₘ-CH₂CH₂CH₂CH₂O-mit R^{A} und R^{B} bevorzugt Wasserstoff, Methyl oder Ethyl und n bevorzugt 0 bis 3, insbesondere 3-Oxabutyl, 3-Oxapentyl, 3,6-Dioxaheptyl, 3,6-Dioxaoctyl, 3,6,9-Trioxadecyl, 3,6,9-Trioxaundecyl, 3,6,9,12-Tetraoxatridecyl und 3,6,9,12-Tetraoxatetradecyl;
• Vinyl; und
• Allyl
• N,N-Di-C₁- bis C₆-alkyl-amino, wie beispielsweise N,N-Dimethylamino und N,N-Diethylamino.

Ganz besonders bevorzugt stehen die Reste R¹ bis R⁹ unabhängig voneinander für Wasserstoff oder C₁-C₁₈-Alkyl, wie beispielsweise Methyl, Ethyl, 1-Butyl, 1-Pentyl, 1-Hexyl, 1-Heptyl, 1-Octyl, für Phenyl, für 2-Hydroxyethyl, für 2-Cyanoethyl, für 2-(Methoxycarbo-nyl)ethyl, für 2-(Ethoxycarbonyl)ethyl, für 2-(n-Butoxycarbonyl)ethyl, für N,N-Dimethyl-amino, für N,N-Diethylamino, für Chlor sowie für CH₃O-(CH₂CH₂O)ₘ-CH₂CH₂- und CH₃CH₂O-(CH₂CH₂O)ₘ-CH₂CH₂- mit m gleich 0 bis 3.

Ganz besonders bevorzugt setzt man als Pyridiniumionen (IIIIa) solche ein, bei denen
• einer der Reste R¹ bis R⁵ Methyl, Ethyl oder Chlor ist und die verbleibenden Reste R¹ bis R⁵ Wasserstoff sind;
• R³ Dimethylamino ist und die verbleibenden Reste R¹, R², R⁴ und R⁵ Wasserstoff sind;
• alle Reste R¹ bis R⁵ Wasserstoff sind;
• R² Carboxy oder Carboxamid ist und die verbleibenden Reste R¹, R², R⁴ und R⁵ Wasserstoff sind; oder
• R¹ und R² oder R² und R³ 1,4-Buta-1,3-dienylen ist und die verbleibenden Reste R¹, R², R⁴ und R⁵ Wasserstoff sind;
und insbesondere solche, bei denen
• R¹ bis R⁵ Wasserstoff sind; oder
• einer der Reste R¹ bis R⁵ Methyl oder Ethyl ist und die verbleibenden Reste R¹ bis R⁵ Wasserstoff sind.

Als ganz besonders bevorzugte Pyridiniumionen (IIIa) seien genannt 1-Methylpyridinium, 1-Ethylpyridinium, 1-(1-Butyl)pyridinium, 1-(1-Hexyl)pyridinium, 1-(1-Octyl)pyridinium, 1-(1-Hexyl)-pyridinium, 1-(1-Octyl)-pyridinium, 1-(1-Dodecyl)-pyridinium, 1-(1-Tetradecyl)-pyridinium, 1-(1-Hexadecyl)-pyridinium, 1,2-Dimethylpyridinium, 1-Ethyl-2-methylpyridi-nium, 1-(1-Butyl)-2-methylpyridinium, 1-(1-Hexyl)-2-methylpyridinium, 1-(1-Octyl)-2-methylpyridinium, 1-(1-Dodecyl)-2-methylpyridinium, 1-(1-Tetradecyl)-2-methylpyridi-nium, 1-(1-Hexadecyl)-2-methylpyridinium, 1-Methyl-2-ethylpyridinium, 1,2-Diethylpyridi-nium, 1-(1-Butyl)-2-ethylpyridinium, 1-(1-Hexyl)-2-ethylpyridinium, 1-(1-Octyl)-2-ethylpy-ridinium, 1-(1-Dodecyl)-2-ethylpyridinium, 1-(1-Tetradecyl)-2-ethylpyridinium, 1-(1-Hexa-decyl)-2-ethylpyridinium, 1,2-Dimethyl-5-ethyl-pyridinium, 1,5-Diethyl-2-methyl-pyridi-nium, 1-(1-Butyl)-2-methyl-3-ethyl-pyridinium, 1-(1-Hexyl)-2-methyl-3-ethyl-pyridinium und 1-(1-Octyl)-2-methyl-3-ethyl-pyridinium, 1-(1-Dodecyl)-2-methyl-3-ethyl-pyridinium, 1-(1-Tetradecyl)-2-methyl-3-ethyl-pyridinium und 1-(1-Hexadecyl)-2-methyl-3-ethyl-pyri-dinium.

Ganz besonders bevorzugt setzt man als Pyridaziniumionen (IIIb) solche ein, bei denen
• R¹ bis R⁴ Wasserstoff sind; oder
• einer der Reste R¹ bis R⁴ Methyl oder Ethyl ist und die verbleibenden Reste R¹ bis R⁴ Wasserstoff sind.

Ganz besonders bevorzugt setzt man als Pyrimidiniumionen (IIIc) solche ein, bei denen
• R¹ Wasserstoff, Methyl oder Ethyl ist und R² bis R⁴ unabhängig voneinander Wasserstoff oder Methyl sind; oder
• R¹ Wasserstoff, Methyl oder Ethyl ist, R² und R⁴ Methyl sind und R³ Wasserstoff ist.

Ganz besonders bevorzugt setzt man als Pyraziniumionen (IIId) solche ein, bei denen
• R¹ Wasserstoff, Methyl oder Ethyl ist und R² bis R⁴ unabhängig voneinander Wasserstoff oder Methyl sind;
• R¹ Wasserstoff, Methyl oder Ethyl ist, R² und R⁴ Methyl sind und R³ Wasserstoff ist;
• R¹ bis R⁴ Methyl sind; oder
• R¹ bis R⁴ Methyl Wasserstoff sind.

Ganz besonders bevorzugt setzt man als Imidazoliumionen (IIIe) solche ein, bei denen
• R¹ Wasserstoff, Methyl, Ethyl, 1-Propyl, 1-Butyl, 1-Pentyl, 1-Hexyl, 1-Octyl, Allyl, 2-Hydroxyethyl oder 2-Cyanoethyl und R² bis R⁴ unabhängig voneinander Wasserstoff, Methyl oder Ethyl sind.

Als ganz besonders bevorzugte Imidazoliumionen (IIIe) seien genannt 1-Methylimidazolium, 1-Ethylimidazolium, 1-(1-Butyl)-imidazolium, 1-(1-Octyl)-imidazolium, 1-(1-Dodecyl)-imidazolium, 1-(1-Tetradecyl)-imidazolium, 1-(1-Hexadecyl)-imidazolium, 1,3-Dimethyl-imidazolium, 1-Ethyl-3-methylimidazolium, 1-(1-Butyl)-3-methylimidazolium, 1-(1-Butyl)-3-ethylimidazolium, 1-(1-Hexyl)-3-methyl-imidazolium, 1-(1-Hexyl)-3-ethylimidazolium, 1-(1-Hexyl)-3-butyl-imidazolium, 1-(1-Octyl)-3-methylimidazolium, 1-(1-Octyl)-3-ethylimidazolium, 1-(1-Octyl)-3-butylimidazolium, 1-(1-Dodecyl)-3-methylimidazolium, 1-(1-Dodecyl)-3-ethylimidazolium, 1-(1-Dodecyl)-3-butylimidazolium, 1-(1-Dodecyl)-3-octylimidazolium, 1-(1-Tetradecyl)-3-methylimidazolium, 1-(1-Tetradecyl)-3-ethylimidazolium, 1-(1-Tetradecyl)-3-butylimidazolium, 1-(1-Tetradecyl)-3-octylimidazolium, 1-(1-Hexadecyl)-3-methylimidazolium, 1-(1-Hexadecyl)-3-ethylimidazolium, 1-(1-Hexade-cyl)-3-butylimidazolium, 1-(1-Hexadecyl)-3-octylimidazolium, 1,2-Dimethylimidazolium, 1,2,3-Trimethylimidazolium, 1-Ethyl-2,3-dimethylimidazolium, 1-(1-Butyl)-2,3-dimethylimidazolium, 1-(1-Hexyl)-2,3-dimethyl-imidazolium, 1-(1-Octyl)-2,3-dimethylimidazolium, 1,4-Dimethylimidazolium, 1,3,4-Trimethylimidazolium, 1,4-Dimethyl-3-ethylimidazolium, 3-butylimidazolium, 1,4-Dimethyl-3-octylimidazolium, 1,4,5-Trimethylimidazolium, 1,3,4,5-Tetramethylimidazolium, 1,4,5-Trimethyl-3-ethylimidazolium, 1,4,5-Trimethyl-3-butylimidazolium und 1,4,5-Trimethyl-3-octylimidazolium.

Ganz besonders bevorzugt setzt man als Pyrazoliumionen (IIIf), (IIIg) beziehungsweise (IIIg') solche ein, bei denen
• R¹ Wasserstoff, Methyl oder Ethyl ist und R² bis R⁴ unabhängig voneinander Wasserstoff oder Methyl sind.

Ganz besonders bevorzugt setzt man als Pyrazoliumionen (IIIh) solche ein, bei denen
• R¹ bis R⁴ unabhängig voneinander Wasserstoff oder Methyl sind.

Ganz besonders bevorzugt setzt man als 1-Pyrazoliniumionen (IIIi) solche ein, bei denen
• unabhängig voneinander R¹ bis R⁶ Wasserstoff oder Methyl sind.

Ganz besonders bevorzugt setzt man als 2-Pyrazoliniumionen (IIIj) beziehungsweise (IIIj') solche ein, bei denen
• R¹ Wasserstoff, Methyl, Ethyl oder Phenyl ist und R² bis R⁶ unabhängig voneinander Wasserstoff oder Methyl sind.

Ganz besonders bevorzugt setzt man als 3-Pyrazoliniumionen (IIIk) beziehungsweise (IIIk') solche ein, bei denen
• R¹ und R² unabhängig voneinander Wasserstoff, Methyl, Ethyl oder Phenyl sind und R³ bis R⁶ unabhängig voneinander Wasserstoff oder Methyl sind.

Ganz besonders bevorzugt setzt man als Imidazoliniumionen (IIII) solche ein, bei denen
• R¹ und R² unabhängig voneinander Wasserstoff, Methyl, Ethyl, 1-Butyl oder Phenyl sind, R³ und R⁴ unabhängig voneinander Wasserstoff, Methyl oder Ethyl sind und R⁵ und R⁶ unabhängig voneinander Wasserstoff oder Methyl sind.

Ganz besonders bevorzugt setzt man als Imidazoliniumionen (IIIm) beziehungsweise (IIIm') solche ein, bei denen
• R¹ und R² unabhängig voneinander Wasserstoff, Methyl oder Ethyl sind und R³ bis R⁶ unabhängig voneinander Wasserstoff oder Methyl sind.

Ganz besonders bevorzugt setzt man als Imidazoliniumionen (IIIn) beziehungsweise (IIIn') solche ein, bei denen
• R¹ bis R³ unabhängig voneinander Wasserstoff, Methyl oder Ethyl sind und R⁴ bis R⁶ unabhängig voneinander Wasserstoff oder Methyl sind.

Ganz besonders bevorzugt setzt man als Thiazoliumionen (IIIo) beziehungsweise (II-Io') sowie als Oxazoliumionen (IIIp) solche ein, bei denen
• R¹ Wasserstoff, Methyl, Ethyl oder Phenyl ist und R² und R³ unabhängig voneinander Wasserstoff oder Methyl sind.

Ganz besonders bevorzugt setzt man als 1,2,4-Triazoliumionen (IIIq), (IIIq') beziehungsweise (IIIq'') solche ein, bei denen
• R¹ und R² unabhängig voneinander Wasserstoff, Methyl, Ethyl oder Phenyl sind und R³ Wasserstoff, Methyl oder Phenyl ist.

Ganz besonders bevorzugt setzt man als 1,2,3-Triazoliumionen (IIIr), (IIIr') beziehungsweise (IIIr'') solche ein, bei denen
• R¹ Wasserstoff, Methyl oder Ethyl ist und R² und R³ unabhängig voneinander Wasserstoff oder Methyl sind, oder R² und R³ zusammen 1,4-Buta-1,3-dienylen ist.

Ganz besonders bevorzugt setzt man als Pyrrolidiniumionen (IIIs) solche ein, bei denen
• R¹ Wasserstoff, Methyl, Ethyl oder Phenyl ist und R² bis R⁹ unabhängig voneinander Wasserstoff oder Methyl sind.

Ganz besonders bevorzugt setzt man als Imidazolidiniumionen (IIIt) solche ein, bei denen
• R¹ und R⁴ unabhängig voneinander Wasserstoff, Methyl, Ethyl oder Phenyl sind und R² und R³ sowie R⁵ bis R⁸ unabhängig voneinander Wasserstoff oder Methyl sind.

Ganz besonders bevorzugt setzt man als Ammoniumionen (IIIu) solche ein, bei denen
• R¹ bis R³ unabhängig voneinander C₁-C₁₈-Alkyl sind; oder
• R¹ und R² zusammen 1,5-Pentylen oder 3-Oxa-1,5-pentylen sind und R³ C₁-C₁₈-Alkyl, 2-Hydroxyethyl oder 2-Cyanoethyl ist.

Als ganz besonders bevorzugte Ammoniumionen (IIIu) seien genannt Methyl-tri-(1-butyl)-ammonium, N,N-Dimethylpiperidinium und N,N-Dimethylmorpholinium.

Beispiele für die tertiären Amine, von denen sich die quartären Ammoniumionen der allgemeinen Formel (IIIu) durch Quaternisierung mit den genannten Resten R ableiten, sind Diethyl-n-butylamin, Diethyl-tert-butylamin, Diethyl-n-pentylamin, Diethylhexylamin, Diethyloctylamin, Diethyl-(2-ethylhexyl)-amin, Di-n-propylbutylamin, Di-n-propyl-n-pentyl-amin, Di-n-propylhexylamin, Di-n-propyloctylamin, Di-n-propyl-(2-ethylhexyl)-amin, Di-isopropylethylamin, Di-iso-propyl-n-propylamin, Di-isopropyl-butylamin, Di-isopropyl-pentylamin, Di-iso-propylhexylamin, Di-isopropyloctylamin, Di-iso-propyl-(2-ethylhexyl)-amin, Di-n-butylethylamin, Di-n-butyl-n-propylamin, Di-n-butyl-n-pentylamin, Di-n-butylhexylamin, Di-n-butyloctylamin, Di-n-butyl-(2-ethylhexyl)-amin, N-n-Butyl-pyrrolidin, N-sek-Butylpyrrodidin, N-tert-Butylpyrrolidin, N-n-Pentylpyrrolidin, N,N-Dimethyl-cyclohexylamin, N,N-Diethylcyclohexylamin, N,N-Di-n-butylcyclohexylamin, N-n-Propyl-piperidin, N-iso-Propylpiperidin, N-n-Butyl-piperidin, N-sek-Butylpiperidin, N-tert-Butylpiperidin, N-n-Pentylpiperidin, N-n-Butylmorpholin, N-sek-Butylmorpholin, N-tert-Butylmorpholin, N-n-Pentylmorpholin, N-Benzyl-N-ethylanilin, N-Benzyl-N-n-propylanilin, N-Benzyl-N-iso-propylanilin, N-Benzyl-N-n-butylanilin, N,N-Dimethyl-p-toluidin, N,N-Diethyl-p-tolui-din, N,N-Di-n-butyl-p-toluidin, Diethylbenzylamin, Di-n-propylbenzylamin, Di-n-butyl-benzylamin, Diethylphenylamin, Di-n-Propylphenylamin und Di-n-Butylphenylamin.

Bevorzugte tertiäre Amine sind Di-iso-propylethylamin, Diethyl-tert-butylamin, Di-isopro-pylbutylamin, Di-n-butyl-n-pentylamin, N,N-Di-n-butylcyclohexylamin sowie tertiäre Amine aus Pentylisomeren.

Besonders bevorzugte tertiäre Amine sind Di-n-butyl-n-pentylamin und tertiäre Amine aus Pentylisomeren. Ein weiteres bevorzugtes tertiäres Amin, das drei identische Reste aufweist, ist Triallylamin.

Ganz besonders bevorzugt setzt man als Guanidiniumionen (IIIv) solche ein, bei denen
• R¹ bis R⁵ Methyl sind.

Als ganz besonders bevorzugtes Guanidiniumion (IIIv) sei genannt N,N,N',N',N",N"-Hexamethylguanidinium.

Ganz besonders bevorzugt setzt man als Choliniumionen (IIIw) solche ein, bei denen
• R¹ und R² unabhängig voneinander Methyl, Ethyl, 1-Butyl oder 1-Octyl sind und R³ Wasserstoff, Methyl, Ethyl, Acetyl, -SO₂OH oder -PO(OH)₂ ist;
• R¹ Methyl, Ethyl, 1-Butyl oder 1-Octyl ist, R² eine -CH₂-CH₂-OR⁴-Gruppe ist und R³ und R⁴ unabhängig voneinander Wasserstoff, Methyl, Ethyl, Acetyl,-SO₂OH oder - PO(OH)₂ sind; oder
• R¹ eine -CH₂-CH₂-OR⁴-Gruppe ist, R² eine -CH₂-CH₂OR⁵-Gruppe ist und R³ bis R⁵ unabhängig voneinander Wasserstoff, Methyl, Ethyl, Acetyl, -SO₂OH oder - PO(OH)₂ sind.

Besonders bevorzugte Choliniumionen (IIIw) sind solche, bei denen R³ ausgewählt ist aus Wasserstoff, Methyl, Ethyl, Acetyl, 5-Methoxy-3-oxa-pentyl, 8-Methoxy-3,6-dioxaoctyl, 11-Methoxy-3,6,9-trioxa-undecyl, 7-Methoxy-4-oxa-heptyl, 11-Methoxy-4,8-dioxa-undecyl, 15-Methoxy-4,8,12-trioxa-pentadecyl, 9-Methoxy-5-oxa-nonyl, 14-Methoxy-5,10-oxa-tetradecyl, 5-Ethoxy-3-oxa-pentyl, 8-Ethoxy-3,6-dioxa-octyl, 11-Ethoxy-3,6,9-trioxa-undecyl, 7-Ethoxy-4-oxa-heptyl, 11-Ethoxy-4,8-dioxa-undecyl, 15-Ethoxy-4,8,12-trioxa-pentadecyl, 9-Ethoxy-5-oxa-nonyl oder 14-Ethoxy-5,10-oxa-tetradecyl. Als ganz besonders bevorzugte Choliniumionen (IIIw) seien genannt Trimethyl-2-hydroxy-ethylammonium, Dimethyl-bis-2-hydroxyethylammonium oder Methyl-tris-2-hydroxyethyl-ammonium.

Ganz besonders bevorzugt setzt man als Phosphoniumionen (IIIx) solche ein, bei denen
• R¹ bis R³ unabhängig voneinander C₁-C₁₈-Alkyl, insbesondere Butyl, Isobutyl, 1-Hexyl oder 1-Octyl sind.

Unter den vorstehend genannten heterocyclischen Kationen sind die Pyridiniumionen, Pyrazolinium-, Pyrazoliumionen und die Imidazolinium- sowie die Imidazoliumionen bevorzugt. Weiterhin sind Ammonium- sowie Choliniumionen bevorzugt.

Insbesondere bevorzugt sind 1-Methylpyridinium, 1-Ethylpyridinium, 1-(1-Butyl)pyridinium, 1-(1-Hexyl)pyridinium, 1-(1-Octyl)pyridinium, 1-(1-Hexyl)-pyridinium, 1-(1-Octyl)-pyridinium, 1-(1-Dodecyl)-pyridinium, 1-(1-Tetradecyl)-pyridinium, 1-(1-Hexadecyl)-pyridinium, 1,2-Dimethylpyridinium, 1-Ethyl-2-methylpyridinium, 1-(1-Butyl)-2-methylpyridinium, 1-(1-Hexyl)-2-methylpyridinium, 1-(1-Octyl)-2-methylpyridinium, 1-(1-Dodecyl)-2-methylpyridinium, 1-(1-Tetradecyl)-2-methylpyridinium, 1-(1-Hexadecyl)-2-methylpyridinium, 1-Methyl-2-ethylpyridinium, 1,2-Diethylpyridinium, 1-(1-Butyl)-2-ethylpyridinium, 1-(1-Hexyl)-2-ethylpyridinium, 1-(1-Octyl)-2-ethylpyridinium, 1-(1-Dodecyl)-2-ethylpyridinium, 1-(1-Tetradecyl)-2-ethylpyridinium, 1-(1-Hexadecyl)-2-ethylpyridinium, 1,2-Dime-thyl-5-ethyl-pyridinium, 1,5-Diethyl-2-methyl-pyridinium, 1-(1-Butyl)-2-methyl-3-ethyl-pyridinium, 1-(1-Hexyl)-2-methyl-3-ethyl-pyridinium, 1-(1-Octyl)-2-methyl-3-ethyl-pyridinium, 1-(1-Dodecyl)-2-methyl-3-ethyl-pyridinium, 1-(1-Tetradecyl)-2-methyl-3-ethyl-pyridinium, 1-(1-Hexadecyl)-2-methyl-3-ethyl-pyridinium, 1-Methylimidazolium, 1-Ethylimidazolium, 1-(1-Butyl)-imidazolium, 1-(1-Octyl)-imidazolium, 1-(1-Dodecyl)-imidazolium, 1-(1-Tetradecyl)-imidazolium, 1-(1-Hexadecyl)-imidazolium, 1,3-Dimethyl-imidazolium, 1-Ethyl-3-methylimidazolium, 1-(1-Butyl)-3-methylimidazolium, 1-(1-Hexyl)-3-methylimidazolium, 1-(1-Octyl)-3-methylimidazolium, 1-(1-Dodecyl)-3-methylimidazolium, 1-(1-Tetradecyl)-3-methylimidazolium, 1-(1-Hexadecyl)-3-methylimidazolium, 1,2-Dimethylimidazolium, 1,2,3-Trimethylimidazolium, 1-Ethyl-2,3-dimethylimidazolium, 1-(1-Butyl)-2,3-dimethylimidazolium, 1-(1-Hexyl)-2,3-dimethylimidazolium und 1-(1-Octyl)-2,3-dimethylimidazolium, 1,4-Dimethylimidazolium, 1,3,4-Trimethylimidazolium, 1,4-Dimethyl-3-ethylimidazolium, 3-Butylimidazolium, 1,4-Dimethyl-3-octylimidazolium, 1,4,5-Trimethylimidazolium, 1,3,4,5-Tetramethylimidazolium, 1,4,5-Trimethyl-3-ethylimidazolium, 1,4,5-Trime-thyl-3-butylimidazolium,1,4,5-Trimethyl-3-octylimidazolium, Trimethyl-2-hydroxyethylammonium, Dimethyl-bis-2-hydroxyethylammonium und Methyl-tris-2-hydroxyethylammonium.

Als Anionen sind prinzipiell alle Anionen einsetzbar.

Das Anion [Y]ⁿ⁻ der ionischen Flüssigkeit ist beispielsweise ausgewählt aus
• der Gruppe der Halogenide und halogenhaltigen Verbindungen der Formel: F, Cl⁻, Br⁻, I⁻; BF₄⁻, PF₆⁻, CF₃SO₃⁻, (CF₃SO₃)₂N⁻, CF₃CO₂⁻, CCl₃CO₂⁻; CN⁻, -CN⁻, OCN⁻
• der Gruppe der Sulfate, Sulfite und Sulfonate der allgemeinen Formel: SO₄²⁻, HSO₄⁻, SO₃²⁻, HSO₃⁻, R^{a}OSO₃⁻, R^{a}SO₃⁻
• der Gruppe der Phosphate der allgemeinen Formel PO₄³⁻, HPO₄²⁻, H₂PO₄⁻, R^{a}P_{O}²⁻, HR^{a}PO₄⁻, R^{a}R^{b}PO₄⁻
• der Gruppe der Phosphonate und Phosphinate der allgemeinen Formel: R^{a}HPO₃⁻, R^{a}R^{b}PO₂⁻, R^{a}R^{b}PO₃⁻
• der Gruppe der Phosphite der allgemeinen Formel: PO₃³⁻, HPO₃²⁻, H₂PO₃⁻, R^{a}PO₃²⁻, R^{a}HPO₃⁻, R^{a}R^{b}PO₃⁻
• der Gruppe der Phosphonite und Phosphinite der allgemeinen Formel: R^{a}R^{b}PO₂⁻, R^{a}HPO₂⁻, R^{a}R^{b}PO⁻, R^{a}HPO⁻
• der Gruppe der Carbonsäuren der allgemeinen Formel: R^{a}COO⁻
• der Gruppe der Borate der allgemeinen Formel: BO₃³⁻, HBO₃²⁻, H₂BO₃⁻, R^{a}R^{b}BO₃⁻, R^{a}HBO₃⁻, R^{a}BO₃²⁻, B(OR^{a})(OR^{b})(OR^{c})(OR^{d})⁻, B(HSO₄)⁻, B(R^{a}SO4)⁻
• der Gruppe der Boronate der allgemeinen Formel: R^{a}BO₂²⁻, R^{a}R^{b}BO⁻
• der Gruppe der Silikate und Kieselsauresäureester der allgemeinen Formel: SiO₄⁴⁻, HSiO₄³⁻, H₂SiO₄²⁻, H₃SiO₄⁻, R^{a}SiO₄³⁻, R^{a}R^{b}SiO₄²⁻, R^{a}R^{b}R^{c}SiO₄⁻, HR^{a}SiO₄²⁻, H₂R^{a}SiO₄⁻, HR^{a}R^{b}SiO₄⁻
• der Gruppe der Alkyl- bzw. Arylsilan-Salze der allgemeinen Formel: R^{a}SiO₃³⁻, R^{a}R^{b}SiO₂²⁻, R^{a}R^{b}R^{c}SiO⁻, R^{a}R ^{b}R^{c}SiO₃⁻, R^{a}R^{b}R^{c}SiO₂⁻, R^{a}R^{b}SiO₃²⁻
• der Gruppe der Carbonsäureimide, Bis(sulfonyl)imide und Sulfonylimide der allgemeinen Formel: 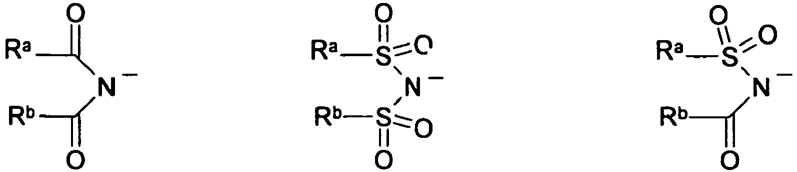
der Gruppe der Methide der allgemeinen Formel:

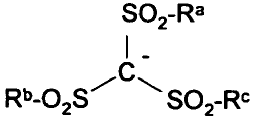

Darin bedeuten R^{a}, R^{b}, R^{c} und R^{d} unabhängig voneinander jeweils Wasserstoff, C₁-C₃₀-Alkyl, gegebenenfalls durch ein oder mehrere nicht-benachbarte Sauerstoff- und/oder Schwefelatome und/oder ein oder mehrere substituierte oder unsubstituierte Iminogruppen unterbrochenes C₂-C₁₈-Alkyl, C₆-C₁₄-Aryl, C₅-C₁₂-Cycloalkyl oder einen fünfbis sechsgliedrigen, Sauerstoff-, Stickstoff- und/oder Schwefelatome aufweisenden Heterocyclus, wobei zwei von ihnen gemeinsam einen ungesättigten, gesättigten oder aromatischen, gegebenenfalls durch ein oder mehrere Sauerstoff- und/oder Schwefelatome und/oder ein oder mehrere unsubstituierte oder substituierte Iminogruppen unterbrochenen Ring bilden können, wobei die genannten Reste jeweils zusätzlich durch funktionelle Gruppen, Aryl, Alkyl, Aryloxy, Alkyloxy, Halogen, Heteroatome und/oder Heterocyclen substituiert sein können.

Darin sind gegebenenfalls durch funktionelle Gruppen, Aryl, Alkyl, Aryloxy, Alkyloxy, Halogen, Heteroatome und/oder Heterocyclen substituiertes C₁-C₁₈-Alkyl beispielsweise Methyl, Ethyl, Propyl, Isopropyl, n-Butyl, sec-Butyl, tert.-Butyl, Pentyl, Hexyl, Heptyl, Octyl, 2-Ethylhexyl, 2,4,4-Trimethylpentyl, Decyl, Dodecyl, Tetradecyl, Hetadecyl, Octadecyl, 1,1-Dimethylpropyl, 1,1-Dimethylbutyl, 1,1,3,3-Tetramethylbutyl, Benzyl, 1-Phenylethyl, α,α-Dimethylbenzyl, Benzhydryl, p-Tolylmethyl, 1-(p-Butylphenyl)-ethyl, p-Chlorbenzyl, 2,4-Dichlorbenzyl, p-Methoxybenzyl, m-Ethoxybenzyl, 2-Cyanoethyl, 2-Cyanopropyl, 2-Methoxycarbonethyl, 2-Ethoxycarbonylethyl, 2-Butoxycarbonylpropyl, 1,2-Di-(methoxycarbonyl)-ethyl, 2-Methoxyethyl, 2-Ethoxyethyl, 2-Butoxyethyl, Diethoxymethyl, Diethoxyethyl, 1,3-Dioxolan-2-yl, 1,3-Dioxan-2-yl, 2-Methyl-1,3-dioxolan-2-yl, 4-Methyl-1,3-dioxo-lan-2-yl, 2-Isopropoxyethyl, 2-Butoxypropyl, 2-Octyloxyethyl, Chlormethyl, Trichlormethyl, Trifluormethyl, 1,1-Dimethyl-2-chlorethyl, 2-Methoxyisopropyl, 2-Ethoxyethyl, Butylthiomethyl, 2-Dodecylthioethyl_{;} 2-Phenlythioethyl, 2,2,2-Trifluorethyl, 2-Hydroxyethyl, 2-Hydroxypropyl, 3-Hydroxypropyl, 4-Hydroxybutyl, 6-Hydroxyhexyl, 2-Aminoethyl, 2-Aminopropyl, 4-Aminobutyl, 6-Aminohexyl, 2-Methylaminoethyl, 2-Methylaminopropyl; 3-Methylaminopropyl, 4-Methylaminobutyl, 6-Methylaminohexyl, 2-Dimethylaminoethyl, 2-Dimethylaminopropyl, 3-Dimethylaminopropyl, 4-Dimethylaminobutyl, 6-Dimethylaminohexyl, 2-Hydroxy-2,2-dimethylethyl, 2-Phenoxyethyl, 2-Phenoxypropyl, 3-Phenoxypropyl, 4-Phenoxybutyl, 6-Phenoxyhexyl, 2-Methoxyethyl, 2-Methoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl oder 6-Ethoxyhexyl.

Gegebenenfalls durch ein oder mehrere nicht-benachbarte Sauerstoff- und/oder Schwefelatome und/oder ein oder mehrere substituierte oder unsubstituierte Iminogruppen unterbrochenes C₂-C₁₈-Alkyl sind beispielsweise 5-Hydroxy-3-oxapentyl, 8-Hydroxy-3,6-dioxaoctyl, 11-Hydroxy-3,6,9-trioxaundecyl, 7-Hydroxy-4-oxaheptyl, 11-Hydroxy-4,8-dioxaundecyl, 15-Hydroxy-4,8,12-trioxapentadecyl, 9-Hydroxy-5-oxanonyl, 14-Hydroxy-5,10-oxatetradecyl, 5-Methoxy-3-oxapentyl, 8-Methoxy-3,6-dioxaoctyl, 11-Methoxy-3,6,9-trioxaundecyl, 7-Methoxy-4-oxaheptyl, 11-Methoxy-4,8-dioxa-undecyl, 15-Methoxy-4,8,12-trioxapentadecyl, 9-Methoxy-5-oxanonyl, 14-Methoxy-5,10-oxatetradecyl, 5-Ethoxy-3-oxapentyl, 8-Ethoxy-3,6-dioxaoctyl, 11-Ethoxy-3,6,9-trioxaundecyl, 7-Ethoxy-4-oxaheptyl, 11-Ethoxy-4,8-dioxaundecyl, 15-Ethoxy-4,8,12-trioxapentadecyl, 9-Ethoxy-5-oxanonyl oder 14-Ethoxy-5,10-oxatetradecyl.

Bilden zwei Reste einen Ring, so können diese Reste gemeinsam beispielsweise als anellierter Baustein 1,3-Propylen, 1,4-Butylen, 2-Oxa-1,3-propylen, 1-Oxa-1,3-propylen, 2-Oxa-1,3-propenylen, 1-Aza-1,3-propenylen, 1-C₁-C₄-Alkyl-1-aza-1,3-propenylen, 1,4-Buta-1,3-dienylen, 1-Aza-1,4-buta-1,3-dienylen oder 2-Aza-1,4-buta-1,3-dienylen bedeuten.

Die Anzahl der nicht-benachbarten Sauerstoff- und/oder Schwefelatome und/oder Iminogruppen ist grundsätzlich nicht beschränkt, bzw. beschränkt sich automatisch durch die Größe des Rests oder des Ringbausteins. In der Regel beträgt sie nicht mehr als 5 in dem jeweiligen Rest, bevorzugt nicht mehr als 4 oder ganz besonders bevorzugt nicht mehr als 3. Weiterhin befinden sich zwischen zwei Heteroatomen in der Regel mindestens ein, bevorzugt mindestens zwei Kohlenstoffatom(e).

Substituierte und unsubstituierte Iminogruppen können beispielsweise Imino-, Methylimino-, iso-Propylimino, n-Butylimino oder tert-Butylimino sein.

Unter dem Begriff "funktionelle Gruppen" sind beispielsweise die folgenden zu verstehen: Carboxy, Carboxamid, Hydroxy, Di-(C₁-C₄-Alkyl)-amino, C₁-C₄-Alkyloxycarbonyl, Cyano oder C₁-C₄-Alkoxy. Dabei ist C₁ bis C₄-Alkyl Methyl, Ethyl, Propyl, Isopropyl, n-Butyl, sec-Butyl oder tert.-Butyl.

Gegebenenfalls durch funktionelle Gruppen, Aryl, Alkyl, Aryloxy, Alkyloxy, Halogen, Heteroatome und/oder Heterocyclen substituiertes C₆-C₁₄-Aryl sind beispielsweise Phenyl, Tolyl, Xylyl, α-Naphthyl, β-Naphthyl, 4-diphenyl, Chlorphenyl, Dichlorphenyl, Trichlorphenyl, Difluorphenyl, Methylphenyl, Dimethylphenyl, Trimethylphenyl, Ethylphenyl, Diethylphenyl, iso-Propylphenyl, tert.-Butylphenyl, Dodecylphenyl, Methoxyphenyl, Dimethoxyphenyl, Ethoxyphenyl, Hexyloxyphenyl, Methylnaphthyl, Isopropylnaphthyl, Chlornaphthyl, Ethoxynaphthyl, 2,6-Dimethylphenyl, 2,4,6-Trimethylphenyl, 2,6-Dimethoxyphenyl, 2,6-Dichlorphenyl, 4-Bromphenyl, 2- oder 4-Nitrophenyl, 2,4- oder 2,6-Dinitrophenyl, 4-Dimethylaminophenyl, 4-Acetylphenyl, Methoxyethylphenyl oder Ethoxymethylphenyl.

Gegebenenfalls durch funktionelle Gruppen, Aryl, Alkyl, Aryloxy, Halogen, Heteroatome und/oder Heterocyclen substituiertes C₅-C₁₂-Cycloalkyl sind beispielsweise Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, Methoxycyclohexyl, Dimethoxycyclohexyl, Diethoxycyclohexyl, Butylthiocyclohexyl, Chlorcyclohexyl, Dichlorcyclohexyl, Dichlorcyclopentyl sowie ein gesättigtes oder ungesättigtes bicyclisches System wie Norbomyl oder Norbornenyl.

Ein fünf- bis sechsgliedriger, Sauerstoff-, Stickstoff- und/oder Schwefelatome aufweisender Heterocyclus ist beispielsweise Furyl , Thiophenyl, Pyryl, Pyridyl, Indolyl, Benzoxazolyl, Dioxolyl, Dioxyl, Benzimidazolyl, Benzthiazolyl, Dimethylpyridyl, Methylchinolyl, Dimethylpyryl, Methoxifuryl, Dimethoxipyridyl, Diflourpyridyl, Methylthiophenyl, Isopropylthiophenyl oder tert.-Butylthiophenyl.

Es versteht sich von selbst, dass auch im Einzelfall der Einsatz einer gezielt eingestellten Mischung verschiedener oben bezeichneter ionischer Flüssigkeiten vorteilhaft vorgenommen werden kann. Im Rahmen der Erfindung hat es sich gezeigt, dass ionische Flüssigkeiten mit einem Imidazolium-Kation in dem betreffenden Salz von besonderem Vorteil sind. Ganz besonders bevorzugt ist es hier, wenn die 1- sowie 3-Stellung oder die 1-, 2- sowie 3-Stellung des Imidazolium-Rings mit einer (C₁-C₆)-Alky-Gruppe substituiert sind. Von besonderem Vorteil hat es sich erwiesen, wenn das Imidazolium-Kation ein 1-Ethyl-3-methylimidazolium-, 1,3-Dimethylimidazolium- oder ein 1-Butyl-3-methylimidazolium-Kation ist.

Die oben dargestellten Kationen der ionischen Flüssigkeiten sind auch bezüglich der Wahl des korrespondierenden Anions nicht wesentlich eingeschränkt. Besonders bevorzugt ist es, wenn das Anion zu dem jeweiligen Kation ein Halogenid-, Perchlorat-, Pseudohalogenid-, Sulfat-, insbesondere Hydrogensulfat-, Sulfilt-, Sulfonat-, Phosphat-, Alkylphosphat-, insbesondere das Mono- und/oder Dialkylphosphat-Anion (bevorzugte Alkylgruppe Me-thyl-, Ethyl- oder Propylgruppe) und/oder ein Carboxylat-Anion, insbesondere ein C₁-C₆-Carboxylat-Anion (vorzugsweise Acetat- oder Proprionat-Anion) ist. Es wird besonders bevorzugt, wenn das Halogenid-Ion als Chlorid-, Bromid- und/oder Iodid-Ion, das Pseudohalogenid-Ion als Cyanid-, Thiocyanat-, Cyanid- und/oder Cyanat-Ion und das C₁-C₆-Carboxylat-Ion als Formiat-, Acetat-, Propionat-, Butyrat-, Hexanoat-, Maleat-, Fumarat-, Oxalat-, Lactat-, Pyruvat, Methansulfonat-, Tosylat- und/oder Alkansulfate-Ion vorliegen.

Der Ordnung halber sollen noch folgende vorteilhafte Anionen bezeichnet werden: R^{a}-COO⁻, R⁻aSO⁻₃, R^{a}R^{b}PO⁻₄ (worin R^{a} und R^{b} die vorstehend bereits dargestellte Bedeutung haben), wozu insbesondere die Anionen der Formel (CH₃O)₂PO₂⁻ und (C₂H₅O)₂PO₂⁻ sowie das Benzoat-Anion zählen, vorzugsweise (C₂H₅O)₂PO₂⁻ sowie das Benzoat-Anion. Dem Fachmann ist es ohne Weiteres möglich, für den jeweiligen Anwendungsfall der Erfindung die besonders geeignete ionische Flüssigkeit einzusetzen. Besonders bevorzugte ionische Flüssigkeiten sind: 1-Ethyl-3-methylimidazolium-acetat, 1,3-Dimethylimidazolium-acetat, 1-Butyl-3-methylimidazolium-acetat, 1-Ethyl-3-methylimidazoliumchlorid, 1-Ethyl-3-methylimidazolium-diethylphosphat, 1-Methyl-3-methylimidazoliumdimethylphosphat, 1-Ethyl-3-methylimidazolium-formiat, 1-Ethyl-3-methylimidazoliumoctanoat, 1,3-Diethylimidazolium-acetat und 1-Ethyl-3-methylimidazolium-propionat. Hierunter sind ganz besonders bevorzugt: 1-Ethyl-3-methylimidazolium-acetat, 1,3-Dimethylimidazolium-acetat, 1-Butyl-3-methylimidazolium-acetat, 1-Ethyl-3-methylimidazolium-diethylphosphat, 1-Methyl-3-methylimidazolium-dimethylphosphat, 1,3-Diethylimidazoliumacetat und 1-Ethyl-3-methylimidazolium-propionat.

Es ist ohne Weiteres ersichtlich, dass es vielfältige Möglichkeiten gibt, eine besonders geeignete ionische Flüssigkeit für den jeweiligen Anwendungszweck auszuwählen, dies insbesondere auch im Hinblick auf den jeweiligen anionischen und kationischen Teil. Unter der Vielzahl der oben dargestellten Möglichkeiten sollen nachfolgend verschiedene Anionen, Kationen sowie Anionen-/ Kationen-Paare als bevorzugt herausgestellt werden:
Anionen: R^{a}COO-, worin bedeuten: R^{a} vorzugsweise Alkyl, insbesondere C₁-C₈-Alkyl und ganz besonders bevorzugt C₁-C₃-Alkyl, oder Phenyl; Phosphat, vorzugsweise Dialkylphosphat, insbesondere Di-(C₁-C₃-Alkyl)phosphat, wobei be sonders bevorzugt ist Dimethylphosphat, Diethylphosphat und Di-n-propylphosphat; Phosphonat, insbesondere O-Alkyl-alkylphosphonat, wobei besonders bevorzugt ist O-Methyl-methylphosphonat, O-Methyl-ethylphosphonat, O-Ethyl-methylphosphonat und O-Ethylethylphosphonat.
Kationen:Verbindungen der vorstehend bereits bezeichneten Formel IIIe, insbesondere 1-Ethyl-3-methylimidazolium (EMIM), 1-Butyl-3-methylimidazolium (BMIM), 1-Ethyl-2,3-dimethylimidazolium (EMMIM) und 1-Butyl-2,3-dimethylimidazolium (BMMIM); Verbindungen der vorstehend bezeichneten Formel IIIa, insbesondere N-Alkyl-pyryidinium, besonders bevorzugt N-Methyl-pyridinium, N-Ethylpyridinium, N-Methyl-2-methylpyridinium, N-Methyl-3-methylpyridinium, N-Ethyl-2-methylpyridinium und N-Ethyl-3-methyl-pyridinium; Verbindungen der vorstehend bezeichneten Formel IIIf, insbesondere 1,2,4-Trimethyipyrazolium.

Für eine besonders bevorzugte Kombination Anion + Kation unter den vorstehend dargestellten Möglichkeiten können angegeben werden: R*^{a}*COO⁻ + Verbindungen der vorstehend bezeichneten Formel IIIe und Phosphat + Verbindungen der vorstehend bezeichneten Formel IIIe.

Ferner sei darauf hingewiesen, dass die nachfolgenden Darstellungen vorteilhafte Ausgestaltungen der Efindung betreffen, insbesondere die oben im Einzelnen detailliert dargestellten Verbindungen. Sollte im Einzelfall auf eine spezielle ionische Flüssigkeit Bezug genommen werden, dann ist es für den Fachmann ohne Weiteres ersichtlich, dass diese Aussagen gleichermaßen auch für die weiteren dargestellten ionischen Flüssigkeiten gelten.

Ein möglicher Grund für den besonderen Vorteil der vorstehend bezeichneten Anionen könnte darin liegen, dass diese besonders starke Wasserstoff-bindende Akzeptoren sind und dies ein Grund für die guten Lösungsergebnisse ist. Alle diese Anionen sind als Wasserstoff-bindende Akzeptoren bekannt und nehmen an einem ausgedehnten Wasserstoff-Bindungsnetzwerk teil. Es ist dem Fachmann überlassen, hier anhand von einfachen Tests zu ermitteln, welche Anionen im Einzelfall für das jeweils gewählte Kohlenhydrat, das gelöst und regeneriert werden soll, besonders geeignet sind.

Für die Zwecke der Erfindung ist es von Vorteil, wenn die geschmolzene ionische Flüssigkeit einen Schmelzpunkt von -100 bis +150 °C, Insbesondere von -30 bis +100 °C, aufweist, wobei der Bereich von -30 bis +80 °C besonders bevorzugt ist. Die ionischen Flüssigkeiten eines Schmelzpunktes von mehr als 100 °C können insbesondere dann eingesetzt werden, wenn ein thermischer Abbau des darin gelösten Kohlenhydrates ausgeschlossen werden kann. In der Mehrzahl der Fälle ist es jedoch vorteilhaft, diesen Höchstwert nicht zu überschreiten.

Das oben bezeichnete Lösungssystem steht nun zur Verfügung, um darin Kohlenhydrate zu lösen und einer Regenerierung, beispielsweise in einem Koagulationsmedium, zu unterziehen.

Erfindungsgemäβ liegen die Kohlenhydrate in Form von Stärke, Cellulose und/oder Derivaten von Stärke und Cellulose vor. Bevorzugt ist es, wenn die Derivate als Ester oder Ether vorliegen. Bei den Estern kann es sich beispielsweise handeln um Celluloseacetat und Cellulosebutyrat und bei den Ethern um Carboxymethylcellulose, Hydroxyethylcellulose und Hydroxypropylcellulose.

Es ist vorteilhaft, das Kohlenhydrat, insbesondere Cellulose, in einem Lösungssystem zu lösen, in dem sich bereits das protische Lösungsmittel, insbesondere Wasser, befindet. Das heißt, es liegt eine homogene Lösung mit definiertem, vorab festgelegten und eingestellten Gehalt an protischem Lösungsmittel, insbesondere Wassergehalt vor. Um dieses Lösungssystem, das das Kohlenhydrat enthält, durch Koagulation zu Fasern oder ähnlichen Gebilden zu verarbeiten, wird diesem System ein weiteres protisches Lösungsmittel, beispielsweise ein Alkohol und/oder Wasser, zugegeben, was zu einer lokalen Ausfällung führt. Es liegt bei der Koagulation ein Gradient an protischem Lösungsmittel, insbesondere von Wasser, von Seiten der Koagulation hin bis zum Kern der verbleibenden Lösung vor. Diffusionskontrolliert fällt schließlich das gesamte Kohlenhydrat, insbesondere Cellulose, aus. Hierdurch wird das gewünschte ausgefällte Material erhalten. Hierauf wird später noch detailliert eingegangen.

Bei der Quantifizierung der zu lösenden Kohlenhydrate unterliegt die Erfindung keiner wesentlichen Einschränkung. Vorzugsweise werden die Stärke, die Cellulose und/oder deren Derivate in dem Lösungssystem in einer Menge von 1 bis 35 Gew.-%, insbesondere in einer Menge von etwa 5 bis 20 Gew.-%, eingesetzt. Wird der Wert von etwa 1 Gew.-% unterschritten, dann stellt sich die wünschenswerte Wirtschaftlichkeit nicht ein.

Im Hinblick auf die angestrebte Qualität des regenerierten Kohlenhydrats ist es zweckmäßig, die Stärke, die Cellulose und/oder deren Derivate weitgehend zu lösen. Dies begünstigt eine vorteilhafte Qualität. Daher ist es zweckmäßig, wenn das Auflösen in dem Lösungssystem bei etwa 20 bis 150 °C, insbesondere bei etwa 30 bis 120 °C, erfolgt.

Bei der angestrebten Regenerierung der in dem Lösungssystem gelösten Kohlenhydrate, beispielsweise in einem Koagulationsmedium, ist es zweckmäßig, die Viskosität des die Kohlenhydrate enthaltenden Lösungssystems gezielt einzustellen. Zweckmäßigerweise liegt die Nullviskosität dieses Lösungssystems (gemessen mit einem Rotationsviskometer) zwischen etwa 5 und 150.000 Pa.s, insbesondere zwischen etwa 10 und 100.000 Pa.s. Weitergehend ist bevorzugt, wenn die Nullviskosität zwischen etwa 5 und 10.000 Pa.s, insbesondere zwischen etwa 10 und 2.500 Pa.s liegt, wobei in diesem Rahmen der Nullviskosität die Verarbeitung des Lösungssystems beispielsweise in einem Extruder besonders vorteilhaft ist.

Von besonderem Wert für die Regenerierung von Cellulose bzw. deren Derivaten anhand des erfindungsgemäßen Lösungssystems ist es, wenn diese einen durchschnittlichen Polymerisationsgrad von etwa 200 bis 3500, insbesondere von etwa 300 bis 1500, aufweisen. Durch die Verarbeitung höher molekularer Cellulose (DP größer 800) werden vorteilhafte Produkteigenschaften, wie beispielsweise Festigkeit, Modul und Steifigkeit erreicht.

Hier wie auch im Zusammenhang mit den anderen angesprochenen Kohlenhydraten ist es von Vorteil, wenn nach dem Lösungen des Kohlenhydrats das erhaltene Lösungssystem entgast wird. Dies kann unter Rühren und unter Anlegen von Vakuum erfolgen.

Zur Herstellung des Kohlenhydrate enthaltenden Lösungssystems kann man Cellulose, Stärke und/oder Derivate hiervon, mit der geschmolzenen lonischen Flüssigkeit, wie vorstehend definiert, mit einer ausreichenden Menge an protischem Lösungsmittel bzw. Gemisch mehrerer protischer Lösungsmittel so lange mischen, bis das Auflösen in dem erforderlichen Umfang durchgeführt worden ist, insbesondere vollständig ist, wobei im Falle des alleinigen Einsatzes von Wasser als protisches Lösungsmittel dieses in dem Lösungssystem in einer Menge von mehr als 5 Gew.-% vorliegt. Zu den besonderen Ausgestaltungen dieser quantitativen Angabe sei auf die vorstehenden Ausführungen verwiesen.

Wenn oben auf die vorteilhafte Ausgestaltung des "vollständigen Lösens" eingegangen wird, so ist das so zu verstehen, dass eine vollständige Lösung dann erhalten wir, wenn sich das Lösegemisch durch ein Filtergewebe mit einer Maschenweite von kleiner 25 Mesh filtrieren lässt, die filtrierte Lösung klar und deren Fließverhalten strukturviskos ist und die Lösung zudem keine Gelteilchen enthält und damit technisch besonders vorteilhaft weiterverarbeitbar ist.

Das Mischen der Ausgangsbestandteile des Lösungssystems, enthaltend Kohlenhydrate, erfolgt vorzugsweise unter Einwirkung hoher Scherkräfte, insbesondere anhand eines Extruders. Hierbei hat sich ein Doppelschneckenextruder als besonders vorteilhaft erwiesen. Das Auflösen wird dadurch weitergehend begünstigt, indem beim Mischen gleichzeitig mit Mikrowellen bestrahlt wird, insbesondere Ultraschall zur Einwirkung kommt. Begünstigt wird das Auflösen der Kohlenhydrate durch Anheben der Temperatur des Lösungssystems. Zweckmäßigerweise beträgt die erhöhte Temperatur etwa 20 bis 150 °C, insbesondere etwa 30 bis 120 °C.

Es wurde vorstehend bereits dargelegt, dass Stärke Cellulose und/oder Derivate von Stärke und Cellulose im Rahmen der Erfindung vorteilhaft behandelt bzw. weiterverarbeitet und regeneriert werden können. Von besonderem Vorteil ist das erfindungsgemäße Verfahren zur regenerierenden Aufarbeitung von Celluloseausgangsmaterialien. Das Celluloseausgangsmaterial liegt vorzugsweise als faserige Cellulose, insbesondere Holzpulpe, Unters, Papier, und/oder in Form anderer Naturcellulosefasern vor. Unter den Naturcellulosefasern können als vorteilhaft Hanf-, Kokos-, Jute-, Bambus- und/oder Sisal-Fasern herausgestellt werden. Im Hinblick auf die angestrebte optimale Qualität des regenerierten Kohlenhydrats hat es sich als zweckmäßig erwiesen, nicht nur eine oder mehrere der vorstehend angesprochenen bevorzugten Maßnahmen zu ergreifen, beispielsweise das Entgasen, sondern das Lösungssystem, das das Kohlenhydrat enthält, vor der Weiterverarbeitung über ein Filter zu filtrieren, insbesondere unter Druckbeaufschlagung oder unter Vakuum, um beispielsweise eventuell vorhandene ungelöste Teilchen, aber auch ein eventuell gebildetes Mikrogel auszuschließen. Dabei hat es sich gezeigt, dass es von Vorteil ist, wenn die Menge an Mikrogel unter 2 Gew.-% liegt. Zur Qualitätsverbesserung des erhaltenen Erzeugnisses ist es zweckmäßig, wie bereits vorstehend angesprochen, das Lösungssystem vor der Weiterverarbeitung zur Regenerierung der darin enthaltenen Kohlenhydrate zu entgasen, was zweckmäßigerweise unter Rühren und unter Vakuum durchgeführt wird. Hierüber gibt es keine speziellen Rahmenbedingungen.

Der besondere Wert des erfindungsgemäßen Lösungssystems, das die oben bezeichneten Kohlenhydrate enthält, liegt in der weitergehenden regenerierenden Verarbeitung, wenn Kohlenhydrate in Form von Stärke, Cellulose und von Derivaten von Stärke und Cellulose vorliegen. So kann dieses Lösungssystem in ein Koagulationsmedium überführt werden, insbesondere in ein Koagulationsmedium, in dem sich ein Lösungsmittel, das die Kohlenhydrate nicht löst und mit der geschmolzenen ionischen Flüssigkeit mischbar ist, befindet. Hierbei können beliebige Formkörper entstehen. Von besonderem Vorteil ist es, wenn das Lösungssystem nassversponnen wird, insbesondere auch unter Einsatz eines Extruders. Ein für diesen Zweck besonders geeignetes Nichtlösungsmittel ist Wasser und/oder ein Alkohol, insbesondere Methanol, Ethanol, Propanol und Butanol, wobei Wasser besonders bevorzugt ist. Dabei ist es von Vorteil, dass das jeweilige Nichtlösungsmittel in dem Koagulationsmedium bzw. Koagulationsmedium mehr oder weniger mit dem protischen Nichtlösungsmittel des in das Koagulationsmedium bzw. Koagulationsbad eingebrachte Lösungssystems identisch ist. Mit anderen Worten ist es besonders vorteilhaft, wenn sowohl in der Lösung des Kohlenhydrats als auch in dem Koagulationsmedium Wasser enthalten ist. Auch ist es von Vorteil, wenn das Lösungssystem als Spinnlösung zur Herstellung nicht fibrillierender Fasern herangezogen wird. Dies ist besonders überraschend, weil es der Stand der Technik nach der WO 2003/029329 zum Ausdruck gebracht hat, dass dann, wenn beispielsweise Wasser in einer Menge von mehr als 1 Gew.-% in dem Lösungssystem enthalten ist, dies in bemerkenswerter Weise nicht nur die Löslichkeit der Cellulose beeinträchtigt, sondern auch einen negativen Einfluss auf seine faserige Struktur hat. Gegen diese richtungsweisenden Angaben der WO 2003/029329 hat die Erfindung eine besonders vorteilhafte technische Lehre geschaffen. Der Einsatz von Wasser als wesentlicher Bestandteil der Regenerierungslösung ist unter Umweltschutzbedingungen von besonderem Wert und hat kostenmäßige Vorteile. Die ionische Flüssigkeit kann problemlos aus dem wässrigen Medium wiedergewonnen werden, ohne dass das Wasser vollständig entfernt werden muss. Bei der Entfernung des Wassers bzw. anderer protischer Lösungsmittel können beispielsweise folgende Maßnahmen ergriffen werden: Pervaporation, Umkehrosmose, Verdampfen des Wassers und/oder der einbezogenen anderen protischen Lösungsmittel.

Aufgrund vorstehender Ausführungen zeigt es sich, dass das Kohlenhydrate enthaltende Lösungssystem besonders vorteilhaft als Spinnlösung zur Herstellung nicht fibrillierender Fasern genutzt werden kann. Es ist bevorzugt, eine Luftspalt-Spinnanlage einzusetzen, um Stapelfasern und Endlosfasern hohen Kristallisationsgrades zu erhalten, beispielsweise eines Kristallisationsgrades KI von mehr als 0,5.

Um den erfindungsgemäßen Gedanken bei der Regenerierung von Kohlenhydraten, insbesondere Cellulose, zu optimieren, ist es zweckmäßig, auch der Viskosität des Lösungssystems Aufmerksamkeit zuzuwenden. So ist es von Vorteil, wenn das Cellulose enthaltende Lösungssystem eine hohe Viskosität aufweist. Im Rahmen der Erfindung ist es zweckmäßig, eine Nullviskosität (gemessen mit einem Rotationsviskosimeter) zwischen etwa 5 und 150.000 Pa.s einzustellen, insbesondere zwischen 10 und 100.000 Pa.s, wobei der Bereich von 100 bis 60.000 besonders bevorzugt ist. Weitergehend ist es bevorzugt, wenn die Nullviskosität zwischen etwa 5 und 10.000 Pa.s, insbesondere zwischen etwa 10 und 2500 Pa.s liegt. Der Gehalt an Cellulose in dem Lösungssystem liegt vorzugsweise zwischen etwa 5 und 25 Gew.-%, während der durchschnittliche Polymerisationsgrad insbesondere bis zu 3500 beträgt, und ganz besonders bevorzugt zwischen etwa 300 bis 1500 liegen sollte. In Einzelfällen ist es besonders vorteilhaft, den Mindestwert auf etwa 350 und den Höchstwert auf etwa 1500 einzustellen.

Zwar ist es für die erfolgreiche Verwirklichung der Erfindung nicht erforderlich, zwingend spezielle Additive einzubeziehen. Zur Einstellung besonderer Eigenschaften des gewonnenen ausgefällten Materials, insbesondere in Form von Filamenten oder Stapelfasern von Cellulose, können aber Additive hinzugefügt werden. Die Additive können, wenn sie in Betracht gezogen werden, an verschiedenen Stellen des Verfahrens eingesetzt werden. So können sie dem Koagulationsmedium, dem Lösungssystems, das die Kohlenhydrate enthält, und/oder in einem nachgeschalteten Schritt, beispielsweise in einem Modifizierungsmedium, eingesetzt werden. Bei den Additiven kann es sich beispielsweise um Mikrokapseln, Porenbildner, Weichmacher, Mattierungsmittel, Flammschutzmittel, Bakterizide, Vernetzungsmittel, Hydrophobiermittel, Antistatika und/oder Farbmittel handeln. Von Vorteil ist es, wenn allein Wasser als Fäll- bzw. Koagulationsmittel herangezogen wird und keine Additive zugesetzt werden. Darüber hinaus ist es in Einzelfällen vorteilhaft, wenn ein Alkohol, ein Gemisch von Alkoholen, ein Gemisch aus Alkohol(en) und Wasser als Fäll- bzw. Koagulationsmedium herangezogen wird. Dann ist es vorteilhaft, keine Additive zuzusetzen.

Bei der Durchführung der Regenerierungsmaßnahme ist es besonders zweckmäßig, das die Kohlenhydrate enthaltende Lösungssystem vor der Verarbeitung zu erwärmen, insbesondere auf etwa 80 bis 120 °C, oder das Koagulationsmedium insbesondere auf eine Temperatur von etwa 40 bis 90 °C einzustellen. Durch diese Maßnahme ergibt sich der Vorteil, dass eine bevorzugte Viskosität der Lösung eingestellt und das Lösungsmittel vorteilhaft ausgewaschen wird.

Der besondere Vorteil des erfindungsgemäßen Vorschlags stellt sich dadurch ein, dass die im Koagulationsbad bzw. -medium, insbesondere Wasser, ausgefällte Stärke, Cellulose und/oder Derivate von Stärke und Cellulose, problemlos abgetrennt und die verbleibende flüssige Phase, gegebenenfalls nach teilweisem Eindampfen, zur Herstellung des ursprünglichen Lösungssystems unter Einbeziehung neu zu regenerierenden Kohlenhydrats zurückgewonnen und eingesetzt werden kann. Das Abtrennen kann beispielsweise durch Filtration, Zentrifugieren oder andere geeignete Maßnahmen erfolgen.

Die Erfindung ist demzufolge vielfältig ausgestaltet und wurde bezüglich dieser Ausgestaltung oben umfänglich dargestellt. Allerdings soll hier auch das nach der Regenerierung des Kohlenhydrates anfallende Verfahrenserteugnis beschvieban werden, insbesondere in Form regenerierter Cellulosefasern.

Das Vesfahren der vorliegenden Erfindung eignetsich zur Heurellung von Spinnfasern auf der Basis von Cellulose, die nicht-fibrillierend und gekennzeichnet sind durch einen Gehalt an Schwefel von weniger als 1 mg/g, insbesondere weniger als 0,75 mg/g und einen Kupfergehalt von weniger als 20 µg/g, insbesondere von weniger als 15 µg/g. Hierbei ist es bevorzugt, dass der Schwefelgehalt weniger als 0,5 mg/g, insbesondere weniger als 0,25 mg/g, und der Kupfergehalt weniger als 10 µg/g, insbesondere weniger als 5 µg/g, beträgt. Die Angaben zu den Spinnfasern gemäß der Erfindung zum Schwefel- und Kupfergehalt beziehen sich insbesondere auf die aus dem Koagutationsbad austretenden und nicht gewaschenen Spinnfasern.

Die Spinnfasern zeichnen sich durch ein vorteilhaftes Wasserrückhaltevermögen aus. Dieses liegt vorzugsweise zwischen etwa 50 und 300%, insbesondere zwischen etwa 65 und 200 % (Feuchtgewicht - Trockengewicht) / Trockengewicht x 100%, nach DIN 53184). Ferner zeigen sie eine vorteilhafte Höchstzugkraft und Höchstzugkraftdehnung. Die Höchstzugkraft nach DIN EN ISO 2062 beträgt mindestens 6 cN/tex, insbesondere mindestens 10 cN/tex. Die Höchstzugkraftdehnung nach DIN EN ISO 2062 beträgt vorzugsweise mindestens 4 %, insbesondere mindestens 6 %.

Die Spinnfasern, Insbesondere die durch Nassverspinnen erhaltenen, zeichnen sich auch dadurch aus, dass sie "nicht-fibrillierend" sind. Dies bedarf der weitergehenden Erläuterung: Die nach dem NMMO-Verfahren hergestellten Lyocellfasern besitzen einen runden bis ovalen Faserquerschnitt und weisen im Gegensatz zu den Viskose- und Modalfäsern eine ausgeprägte fibrillare Struktur auf, die weitgehend homogen über den Faserquerschnitt ist Es liegen Makrofibrillen mit einem Durchmesser im Bereich 0,5 bis 1,0 µm vor, die relevant für die auffällige und in der Technik meist störende Nassfibrillation und das Pilling sind. Eine Einstufung der Fibrillation kann anhand eines nachfolgend beschriebenen Fibrilliertests durchgeführt werden:
Es werden aus dem Probenmaterial 8 Filamente separiert. Die Fasern werden gerade auf einen Objektträger gelegt und an den Enden mit Doppelklebeband fixiert. Der Zuschnitt der Fasern auf 2 cm Länge erfolgt mittels Skalpell auf dem Objektträger. Die 8 Fasern werden mit 4 ml demineralisiertem Wasser in ein zylindrisches 20 ml-Glasgefäß (Höhe 50 mm, Durchmesser 30 mm) gefüllt. Die Probengläser werden in einen geeigneten Schüttelthermostaten (z.B. der Firma B. Braun) gespannt und 9 Stunden bei 160 U/min geschüttelt. Anschließend werden die Fasern auf einen Objektträger überführt, in VE-Wasser eingebettet und mit einem Deckglas versehen. Die Auswertung erfolgt mit einem Durchlichtmikroskop (z.B. Zeiss Axioplan). Es erfolgt eine 20-fache Objektivvergrößerung ohne Zwischenvergrößerung. Die Aufnahmen erfolgen im Phasenkontrast, so dass die abstehenden Fibrilien deutlich sichtbar dargestellt werden können. Entlang der Fasermitte wird eine Strecke von 580 µm abgemessen. Die Zählung der Einzeifasern erfolgt nur innerhalb dieser Messtrecke. Es sind diejenigen Fibrillen zu zählen, die bei dieser Vergrößerung deutlich sichtbar sind. Der Messvorgang wird pro Probe an 4 Bildern durchgenommen, die jeweils von einer anderen Faser stammen.

Fibrillations-Bewertung: 0 bis 5 gezählte Fibrillen = Note 1; 6 bis 10 gezählte Fibrillen = Note 2; 11 bis 15 gezählte Fibrillen = Note 3; 16 bis 20 gezählte Fibrillen = Note 4; 21 bis 25 gezählte Fibrillen = Note 5.

Gemäß den von K. Bredereck und F. Hermanutz in Rev. Prog. Color. 35 (2005), 59 zitierten Nassfibrillationsnoten weisen nach dem NMMO-Verfahren hergestellte Cellulosefasern eine Note von 4 oder 5 auf, während Normalviskose und Modal eine Note von 1 aufweisen und damit als nichtfibrillierend einzustufen sind. Die starke Nassfibrillation der aus NMMO gewonnenen Faser stellt einen gravierenden Nachteil in Textilveredlungsprozessen dar, wie z.B. in der Färbung, und erzwingt veränderte Arbeitsprozesse und maschinentechnische Zusatzmaßnahmen in der Verarbeitung. Die Herstellung fibrillationsfreier Cellulosefasern, die nach dem NMMO-Verfahren erhalten werden, ist aufgrund der Besonderheiten des Spinnprozesses (Spinnen über einen Luftspalt) nicht möglich, sondern nur durch eine spezielle Fasernachbehandlung zu erreichen. Zur Vermeidung der Fibrillierneigung von aus NMMO-Lösung gesponnenen sogenannten Lyocellfasern werden in der Fasernachbehandlung nach dem Stand der Technik reaktive, die Celluloseketten vernetzende Substanzen zugefügt. Eine Reduzierung der Fibrillation lässt sich demnach durch chemische Vernetzung bei der Nachbehandlung niemals getrockneter Fasern erreichen und hat zu den modifizierten Lyocellfasertypen Lenzing Lyocell LF (C. Rohrer, P. Retzel and H. Firgo in Man-made Fiber Yearbook (Chem. Fibers Intern.) 2001, 8 (2001) 26 und Tencel A100 (P. Alwin and J. Taylor in Melliand Textilber., 82 (2001) 196) geführt. Durch Einführung der Vernetzungsbrücken kommt es beim ersten Trocknen zu einer deutlich geringeren irreversiblen Verhornung wie bei den Standard-Lyocellfasern. Probleme bei diesen fibrillationsarmen direktgesponnenen Cellulosefasern bereitet indessen die Tatsache, dass die zur Vernetzung eingesetzten Substanzen einige der in Folgeprozessen herrschenden Bedingungen nur eingeschränkt überstehen. So ist es zum Beispiel im Falle des als Vernetzer eingesetzten Dichlorchlormonohydroxytriazins bekannt, dass fast die Hälfte des Vernetzers im Zuge einer technisch üblichen Wasserstoffperoxidbleiche abgespalten wird, so dass wieder eine verstärkte Fibrillierung der Faser erhalten wird. Von großem Vorteil wäre es demnach, wenn der Industrie direktgesponnene, nichtfibrillierende Cellulosefasern zur Verfügung gestellt werden könnten.

Mit der Erfindung ist es nun möglich, Cellulose, die in Form von Zellstoff, Baumwolilinters etc. vorliegt, mittels einer geeigneten Löseroutine - und ohne vorhergehende Derivatisierung - in einem dafür geeigneten Lösemittel zu lösen und verspinnbare Lösungen zu erhalten, die zu den porösen Spinnfasern gemäß der Erfindung führen und die nach oben beschriebener Testmethode und Bewertungsskala eine Nassfibrillationsnote von gleich oder weniger als 2 aufweisen. Es hat sich gezeigt, dass die erfindungsgemäßen porösen Spinnfasern vorteilhafte weitere Eigenschaften aufweisen, auf die vorstehend bereits eingegangen wurde, insbesondere ein Wasserrückhaltevermögen gemäß DIN 53184 zwischen 50 und 300 %, vorteilhafte Werte des Wasserrückhaltevermögens zwischen 65 und 200 %, der Höchstzugkraft nach DIN EN ISO 2062 von mindestens 6 cN/tex und der Höchstzugkraftdehnung von mindestens 4 %.

Zudem haben sie eine wünschenswert glatte Oberfläche. Im Rahmen der Erfindung ist es vorteilhaft, dass bei der Herstellung von Spinnfasern der Zusatz schwefelhaltiger Chemikalien des Viskoseverfahrens oder von Metallen, wie Kupfer oder Lithium oder deren Salzen, vermieden werden kann.

Die mit dem erfindungsgemäßen komplexen Vorschlag zur Lösung der gestellten Aufgabe verbundenen Vorteile sind vielschichtig:
Überraschenderweise wurde getunden, daß Lösungssysteme auf Basis einer speziellen ionischen Flüssigkeit Biopolymere, Insbesondere Cellulose, unter Zusatz von protischem Lösungsmittel, insbesondere von Wasser, in einer Menge von mindestens 5 Gew.-%, in Gehalten bis zu Insbesondere 35 Gew.-% lösen. Darüber hinaus werden gleichermaßen überraschend durch die gezielte Beimischung protischer Lösungsmittel, insbesondere durch Wasser, technisch wichtige Systemverbesserungen erzielt. Hierzu zählen die Erniedrigung der Viskosität des Lösungssystems, die eine vereinfachte Lösungsherstellung ermöglicht, die Stabilisierung der Verarbeitungsmasse und die Verbesserung der Verarbeitungsfähigkeit durch Änderung der Lösungsstruktur. Ferner wird der Verarbeitungsprozess flexibler und ökonomischer, da das Koagulationsmedium bereits in der Verarbeitungsmasse enthalten ist. Hierdurch werden Diffusionsvorgänge zum Auswaschen der geschmolzenen ionischen Flüssigkeit bei der Produktkonsolidierung erheblich beschleunigt.

Bei einer beispielhaften Ausführungsform der Erfindung wird daher die bezeichnete geschmolzene ionische Flüssigkeit vorgelegt und ein protisches Lösungsmittel, vorzugsweise Wasser, in einer Menge von insbesondere 6 bis 15 Gew.-% zugegeben und intensiv gemischt. Dieses Lösungssystem wird dann auf eine geeignete Lösetemperatur eingestellt und thermostatisiert. Stärke oder Cellulose bzw. deren Derivate, wird dann unter Rühren in einer praxisgerechten Menge, beispielsweise in einer Menge von 5 bis 35 Gew.-%, dem Lösungssystem zugegeben. Es folgt eine Thermostatisierung bei einer geeigneten Lösetemperatur, bis das Auflösen des Biopolymers weitestgehend abgeschlossen ist. Bei einer bevorzugten Weiterverarbeitung wird dann diese Lösung filtriert, unter Vakuum entgast und auf einer Spinnanlage durch Spinndüsen in ein Koagulationsbad extrudiert. Dieses besteht insbesondere und vorwiegend aus dem im Lösungssystem enthaltenen protischen Lösungsmittel. Zur Produktkonsolidierung wird die ionische Flüssigkeit im protischen Lösungsmittel vollständig ausgewaschen und das Produkt, beispielsweise eine Cellulosefaser, getrocknet. Zur Rückgewinnung für einen erneuten Einsatz wird das protische Lösungsmittel von der ionischen Flüssigkeit bis zum bevorzugten Gehalt von etwa 6 bis 15 Gew.-% Wasser, wenn gewählt, beispielsweise durch Destillation entfernt. Danach wird das Lösungssystem zum Auflösen von Biopolymeren erneut eingesetzt. Diese beispielhafte Ausführungsform zeigt bereits, dass eine verbesserte Verarbeitung, wie eine flexible Einstellung von Produkteigenschaften und eine besonders wirtschaftliche Verfahrensdurchführung, ermöglicht werden.

Im Hinblick auf die erhaltenen Spinnfasern sei noch auf folgende Vorteile hingewiesen, die sich aus der besonderen Verfahrensweise gemäß der Erfindung ergeben: Es lassen sich hervorragende Lösungsmittel für Cellulose einsetzen, insbesondere in Form von 1-Ethyl-3- methylimidazolium-acetat (EMIM-OAc). EMIM-OAc führt zu folgenden Vorteilen: Es handelt sich um eine Flüssigkeit bei Raumtemperatur. Sie führt zu stabilen Spinnlösungen. Mit EMIM-OAc kann Cellulose problemlos bis zu 25 Ges.-% gelöst werden. Die Herstellung, Filtration und das Entgasen der Spinnlösung ist technisch einfach. Gelteilchen werden weitestgehend ausgeschlossen. Es ist keine bemerkenswerte Empfindlichkeit gegenüber Luft feststellbar. Die Spinnlösungen haben hervorragende Hitzestabilität. Die Zugabe von Stabilisatoren ist nicht erforderlich. Die Spinnlösungsviskosität kann in einem weiten Bereich (10 bis 10.000 Pas) eingestellt werden, was eine hohe Flexibilität im Spinnverfahren bedeutet. Somit schafft die Erfindung ein sehr interessantes Verfahren zur umweltfreundlichen Produktion von "man made" Cellulosematerialien. Verbunden ist hiermit eine hohe Produktionsflexibilität mit einem breiten Bereich mechanischer Eigenschaften. Es treten keinerlei Probleme bei anschließenden Verfahren auf, wie dem Garnverspinnen, Stricken bzw. Wirken, Färben und bei Maßnahmen, die zur Verbesserung der Gebrauchs- und Fabrikationsechtheiten, insbesondere der Farbechtheit.

Die Erfindung soll nachfolgend anhand verschiedener Beispiele noch näher erläutert werden. Wenn in den Beispielen von "Gewichtsprozent" gesprochen wird, dann soll sich dieses auf das Gesamtgewicht der Endlösung beziehen.

### Beispiel 1 (Herstellung einer wasserhaltigen Celluloselösung in 1-Ethyl-3-methylimidazolium-acetat (EMIM-OAc))

Zu 800 g 1-Ethyl-3-methylimidazolium-acetat (EMIM-OAc) werden bei 50°C 100 g Wasser während 5 min unter Rühren zugegeben. Das Lösungsmittelgemisch wird im Labormixer vorgelegt und auf 70°C (Lösetemperatur) im Umluftofen thermostatisiert. Hierzu werden 100 g Cellulose (Baumwoll-Linters DP 750) gegeben. Es wird 40 s auf Stufe 2 gemixt und für 45 min bei 90°C im Umluftofen gelagert. Danach wird erneut 40 s auf Stufe 2 gemixt und weitere 45 min auf 90°C temperiert. Die Celluloselösung wird in einer Drucknutsche (15 µm Filtergewebe) filtriert. Die Lösung wird bei Raumtemperatur gelagert.

### Beispiel 2 (Herstellung einer wasserhaltigen Celluloselösung in EMIM-Acetat)

In einem doppelwandigen, thermostatisierbaren Reaktionsgefäß mit Flügelrührer, Rührmotor und Rückflusskühler werden 1600 g 1-Ethyl-3-methylimidazolium-acetat (EMIM-OAc) auf 80°C erwärmt. 200 g Wasser werden während 5 min unter Rühren zugegeben. Zum Lösungsmittelgemisch werden 200 g Cellulose (Baumwoll-Linters DP 750) während 15 min zugegeben. Danach wird 2 h bei 80°C gerührt. Die Celluloselösung wird in einer Drucknutsche (15 µm Filtergewebe) filtriert. Die Lösung wird bei Raumtemperatur gelagert.

### Beispiel 3 (Herstellung einer wasserhaltigen Celluloselösung in EMIM-Acetat)

In einem thermostatisierbaren Autoklaven (bestückt mit Flügelrührer und Rührmotor sowie einer Filtereinheit) werden 800 g 1-Ethyl-3-methylimidazolium-acetat (EMIM-OAc) und 100 g Wasser vorgelegt und unter Rühren auf 70°C erwärmt. Zum Lösungsmittelgemisch werden 100 g Cellulose (Baumwoll-Linters DP 750) gegeben. Der Autoklav wird verschlossen. Danach wird 2 h bei 80°C und einem Druck von 3,5 bar gerührt. Die Celluloselösung wird unter Druck über ein Nadelventil über den Metallsiebfilter (mehrlagig 15 µm) in ein Vorlagegefäß ausgetragen. Die Lösung wird bei Raumtemperatur gelagert.

### Beispiel 4 (Herstellung einer wasserhaltigen Celluloselösung in EMIM-Acetat)

1600 g 1-Ethyl-3-methylimidazolium-acetat (EMIM-OAc) und 200 g Wasser werden bei Raumtemperatur gemischt. Zum Lösungsmittelgemisch werden 200 g Cellulose (Baumwoll-Linters DP 750) gegeben. Das Gemisch wird über eine Dosiereinheit mit einem Eintrag von 25 g/min in den Extruder zudosiert. Der Extruder ist mit einer Schnecke mit dynamischem Mischkopf bestückt. Während einer Verweilzeit von 15 min und bei 100°C wird das Gemisch homogenisiert über einen Filterkopf mit Metallsiebfilter (mehrlagig 15µm) in ein Vorlagegefäß extrudiert. Die Lösung wird bei Raumtemperatur gelagert.

### Beispiel 5 (Herstellung einer wasserhaltigen Celluloselösung in 1,3-Dimethylimidazolium-acetat (MMIM-OAc))

Ausführung erfolgt wie in Beispiel 1 bei einer Lösetemperatur von 80°C.

### Beispiel 6 (Herstellung einer wasserhaltigen Celluloselösung in 1-Butyl-3-methylimidazolium-acetat (BMIM-OAc))

Ausführung erfolgt wie in Beispiel 1 bei einer Lösetemperatur von 75 °C.

### Beispiel 7 (Herstellung einer wasserhaltigen Celluloselösung in 1-Ethyl-3-methylimidazolium-chlorid (EMIM-CI))

Ausführung erfolgt wie in Beispiel 1 bei einer Lösetemperatur von 100°C.

### Beispiel 8 (Herstellung einer wasserhaltigen Celluloselösung in 1-Butyl-3-methylimidazolium-acetat (BMIM-OAc))

Ausführung erfolgt wie in Beispiel 1 bei einer Lösetemperatur von 90 °C.

### Beispiele 9 - 13 (Herstellung von wasserhaltigen Celluloselösungen mit unterschiedlichen Zellstoffen)

Ausführung erfolgt wie in Beispiel 1. Als Zellstoffe werden Linters mit DP 1250, DP 455 und DP 1950 sowie ein Eucalyptuszellstoff mit DP 690 eingesetzt. Die Nullviskositäten der filtrierten Lösungen, gemessen bei 95 °C, betragen nach Tabelle I:

**Tabelle I**

| | DP | Nullviskosität Pa.s |
|---|---|---|
| Linters | 1250 | 320 |
| Linters | 455 | 56 |
| Unters | 1950 | 850 |
| Eucalyptuszellstoff | 690 | 180 |

### Beispiel 14 (Variation des Wassergehaltes)

Ausführung erfolgt wie in Beispiel 1. Der Wassergehalt der Celluloselösungen wird jeweils auf 1 Gew.-% (Zugabe 10 g Wasser), 3 Gew.-% (Zugabe 40 g Wasser), 5 Gew.-% (Zugabe 50 g Wasser), 15 Gew.-% (Zugabe 150 g Wasser) eingestellt. Die Nullviskositäten der filtrierten Lösungen, gemessen bei 95 °C, betragen nach Tabelle II:

**Tabelle II**

| Wassergehalt [Gew.-%] | Nullviskosität [Pa.s] |
|---|---|
| 1 | 178 |
| 3 | 190 |
| 5 | 215 |
| 10 | 225 |
| 15 | 230 |

### Beispiel 15 (Zumischung eines weiteren protischen Lösungsmittels)

Ausführung erfolgt wie in Beispiel 1. Bei Zugabe von Wasser wird zusätzlich 10 g Ethanol zugegeben.

### Beispiel 16 (Herstellung hochkonzentrierter Celluloselösungen)

Die Ausführung erfolgt wie in Beispiel 4. Die Cellulosekonzentration wird durch Zugabe von 400 g Cellulose (Linters DP 750) auf 20 Gew.-% in der Lösung erhöht.

### Beispiel 17 (Faserherstellung)

Die Lösungen aus Beispiel 1 bis 4 werden auf einer Nassspinnanlage zu Fasern über eine 100 Loch-Düse (80 µm Lochdurchmesser) verarbeitet. Als Koagulationsbad wird Wasser eingesetzt. Danach wird das Lösemittel ausgewaschen und die Fasern werden getrocknet.

### Beispiel 18 (Recycling)

Das Koagulationsbad aus Beispiel 17 wird thermisch auf einen Wassergehalt von 10 Gew.-% eingestellt (= Recyclat). 900 g des Recyclats werden im Labormixer vorgelegt, auf 70°C (Lösetemperatur) im Umluftofen thermostatisiert und 100 g Cellulose (Baumwoll-Linters DP 750) zugegeben. Es wird 40 s auf Stufe 2 gemixt und für 45 min bei 90 °C im Umluftofen gelagert. Danach wird erneut 40 s auf Stufe 2 gemixt und weitere 45 min auf 90 °C temperiert. Die Celluloselösung wird in einer Drucknutsche (15 µm Filtergewebe) filtriert. Die Lösung wird bei Raumtemperatur gelagert.

### Beispiel 19 (Faserherstellung mit Luftspalt)

Die Lösung aus Beispiel 1 wird mit einer konventionellen Nassspinnanlage (Typ 1) und über einen Luftspalt nach der Spinndüse (Typ 2) verarbeitet. Die Anlagen- bzw.- Verfahrensbeschreibung ergibt sich aus der nachfolgenden Tabelle III.

**Tabelle III**

| | Typ1 | Typ2 |
|---|---|---|
| Luftspalt | - | 15mm |
| Düse | 100 Loch/ 60 µm | 28 Loch / 100 µm |
| Spinntemperatur | 80 °C | 80 °C |
| Koagulationsmedium | Wasser (80 °C) | Wasser (20 °C) |
| Waschmedium | Wasser (60 °C) | Wasser (60 °C) |
| Spinngeschwindigkeit | 20 m/min | 40 m/min |

Anhand der vorstehend beschriebenen Verfahren ergeben sich die in der nachfolgenden Tabelle IV dargestellten Fasereigenschaften:

**Tabelle IV**

| | Typ1 | Typ2 |
|---|---|---|
| Feinheit (Einzelfilament) | 2,5 dtex | 3,5 dtex |
| Festigkeit*** | 19 cN/tex | 36 cN/tex |
| Dehnung** | 15 % | 10 % |
| WRV* | 95 % | 65 % |
| Kristallinität CI | 56 % | 71 % |

| | | |
|---|---|---|
| * Wasserrückhaltevermögen ** Höchstzugkraftdehnung *** Höchstzugkraft | | |

### Beispiel 20 (Faserherstellung mit EMIM-CI)

Die Lösung aus Beispiel 7 wurde mit den Spinnanlagen aus Beispiel 19 verarbeitet.
Die Anlagen- bzw. Verfahrensbeschreibung ergibt sich aus der nachfolgenden Tabelle V:

**Tabelle V**

| | Typ1 | Typ2 |
|---|---|---|
| Luftspalt | - | 15mm |
| Düse | 100 Loch/ 60 µm | 28 Loch / 100 µm |
| Spinntemperatur | 100 °C | 100 °C |
| Koagulationsmedium | Wasser (90 °C) | Wasser (20 °C) |
| Waschmedium | Wasser (60 °C) | Wasser (60 °C) |
| Spinngeschwindigkeit | 20 m/min | 40 m/min |

Anhand der vorstehend beschrieben Verfahren ergeben sich die in der nachfolgenden Tabelle VI dargestellten Fasereigenschaften:

**Tabelle VI**

| | TYP1 | Typ2 |
|---|---|---|
| Feinheit (Einzelfilament) | 2,5 dtex | 3,5 dtex |
| Festigkeit | 17 cN/tex | 34 cN/tex |
| Dehnung | 16 % | 11 % |
| WRV | 92 % | 68 % |
| Kristallinität C_{I} | 54 % | 69 % |

### Beispiel 21 (Faserherstellung mit BMIM-OAc)

Die Lösung aus Beispiel 6 wurde mit den Spinnanlagen aus Beispiel 19 verarbeitet.
Die Anlagen- bzw. Verfahrensbeschreibung ergibt sich aus der nachfolgenden Tabelle VII:

**Tabelle VII**

| | Typ1 | Typ2 |
|---|---|---|
| Luftspalt | - | 15 mm |
| Düse | 100 Loch/ 60 µm | 28 Loch / 100 µm |
| Spinntemperatur | 60 °C | 60 °C |
| Koagulationsmedium | Wasser (60 °C) | Wasser (20 °C) |
| Waschmedium | Wasser (60 °C) | Wasser (60 °C) |
| Spinngeschwindigkeit | 20 m/min | 40 m/min |

Anhand der vorstehend beschrieben Verfahren ergeben sich die in der nachfolgenden Tabelle VIII dargestellten Fasereigenschaften:

**Tabelle VIII**

| | Typ1 | Typ2 |
|---|---|---|
| Feinheit (Einzelfilament) | 2,0 dtex | 3,1 dtex |
| Festigkeit | 14,5 cN/tex | 27 cN/tex |
| Dehnung | 13,5 % | 12 % |
| WRV | 110 % | 84 % |
| Kristallinität C_{I} | 36 % | 56 % |

### Beispiel 22 (Faserherstellung mit BMIM-CI)

Die Lösung aus Beispiel 8 wurde mit den Spinnanlagen aus Beispiel 19 verarbeitet.
Die Anlagen- bzw. Verfahrensbeschreibung ergibt sich aus der nachfolgenden Tabelle IX:

**Tabelle IX**

| | Typ1 | Typ2 |
|---|---|---|
| Luftspalt | - | 15 mm |
| Düse | 100 Loch/ 60 µm | 28 Loch / 100 µm |
| Spinntemperatur | 80 °C | 80 °C |
| Koagulationsmedium | Wasser (80 °C) | Wasser (20 °C) |
| Waschmedium | Wasser (60 °C) | Wasser (60 °C) |
| Spinngeschwindigkeit | 20 m/min | 40 m/min |

Anhand der vorstehend beschrieben Verfahren ergeben sich die in der nachfolgenden Tabelle X dargestellten Fasereigenschaften:

**Tabelle X**

| | Typ1 | Typ2 |
|---|---|---|
| Feinheit (Einzelfilament) | 2,0 dtex | 3,0 dtex |
| Festigkeit | 19,5 cN/tex | 29 cN/tex |
| Dehnung | 14 % | 9 % |
| WRV | 104 % | 76 % |
| Kristallinität C_{I} | 42 % | 57 % |

### Beispiel 23 (Faserherstellung nach Lösungsherstellung im Extruder)

Die Lösung aus Beispiel 4 wurde mit den Spinnanlagen aus Beispiel 19 verarbeitet. Hierbei wurde keine Änderung der Verfahrensparameter vorgenommen.

Anhand der vorstehend beschrieben Verfahren ergeben sich die in der nachfolgenden Tabelle XI dargestellten Fasereigenschaften:

**Tabelle XI**

| | Typ1 | Typ2 |
|---|---|---|
| Feinheit (Einzelfilament) | 2,5 dtex | 3,5 dtex |
| Festigkeit | 15,5 cN/tex | 32 cN/tex |
| Dehnung | 17 % | 11,5 % |
| WRV | 89 % | 74 % |
| Kristallinität C_{I} | 53 % | 66 % |

### Beispiel 24 (Faserherstellung mit Linters DP 1250)

Die Lösung aus Beispiel 9 wurde mit den Spinnanlagen aus Beispiel 19 verarbeitet.
Die Anlagen- bzw. Verfahrensbeschreibung ergibt sich aus der nachfolgenden Tabelle XII:

**Tabelle XII**

| | Typ1 | Typ2 |
|---|---|---|
| Luftspalt | - | 15mm |
| Düse | 100 Loch/ 60 µm | 28 Loch / 100 µm |
| Spinntemperatur | 100 °C | 100 °C |
| Koagulationsmedium | Wasser (90 °C) | Wasser (20 °C) |
| Waschmedium | Wasser (60 °C) | Wasser (60 °C) |
| Spinngeschwindigkeit | 20 m/min | 40 m/min |

Anhand der vorstehend beschrieben Verfahren ergeben sich die in der nachfolgenden Tabelle XIII dargestellten Fasereigenschaften:

**Tabelle XIII**

| | TYP1 | Typ2 |
|---|---|---|
| Feinheit (Einzelfilament) | 2, 5 dtex | 3,5 dtex |
| Festigkeit | 19 cN/tex | 41 cN/tex |
| Dehnung | 14 % | 7 % |
| WRV | 87 % | 64 % |
| Kristallinität C_{I} | 55 % | 62 % |

### Beispiel 25 (Faserherstellung mit Linters DP 1950)

Die Lösung aus Beispiel 11 wurde mit der Spinnanlagen Typ2 aus Beispiel 19 verarbeitet.
Die Anlagen- bzw. Verfahrensbeschreibung ergibt sich aus der nachfolgenden Tabelle XIV:

**Tabelle XIV**

| Anlage | Typ2 |
|---|---|
| Luftspalt | 25 mm |
| Düse | 28 Loch / 100 µm |
| Spinntemperatur | 130 °C |
| Koagulationsmedium | Wasser (20 °C) |
| Waschmedium | Wasser (60 °C) |
| Spinngeschwindigkeit | 40 m/min |

Anhand der vorstehend beschrieben Verfahren ergeben sich die in der nachfolgenden Tabelle XV dargestellten Fasereigenschaften:

**Tabelle XV**

| Anlage | Typ2 |
|---|---|
| Feinheit (Einzelfilament) | 3,2 dtex |
| Festigkeit | 44 cN/tex |
| Dehnung | 6,5 % |
| WRV | 56 % |
| Kristallinität C_{I} | 68 % |

### Beispiel 26 (Faserherstellung mit Linters DP 455)

Die Lösung aus Beispiel 10 wurde mit den Spinnanlagen aus Beispiel 19 verarbeitet.
Die Anlagen- bzw. Verfahrensbeschreibung ergibt sich aus der nachfolgenden Tabelle XVI:

**Tabelle XVI**

| | Typ1 | Typ2 |
|---|---|---|
| Luftspalt | - | 10 mm |
| Düse | 100 Loch/ 60 µm | 28 Loch / 100 µm |
| Spinntemperatur | 40 °C | 40 °C |
| Koagulationsmedium | Wasser (40 °C) | Wasser (20 °C) |
| Waschmedium | Wasser (60 °C) | Wasser (60 °C) |
| Spinngeschwindigkeit | 20 m/min | 40 m/min |

Anhand der vorstehend beschrieben Verfahren ergeben sich die in der nachfolgenden Tabelle XVII dargestellten Fasereigenschaften:

**Tabelle XVII**

| | Typ1 | Typ2 |
|---|---|---|
| Feinheit (Einzelfilament) | 2,0 dtex | 2,5 dtex |
| Festigkeit | 13 cN/tex | 26 cN/tex |
| Dehnung | 18 % | 13 % |
| WRV | 116 % | 88 % |
| Kristallinität C_{I} | 37 % | 62 % |

### Beispiel 27 (Faserherstellung mit Lösungswassergehalt 10 Gew.%)

Die Lösung aus Beispiel 15 mit Wassergehalt 10 Gew.% wurde mit den Spinnanlagen aus Beispiel 19 verarbeitet. Hierbei wurden keine Änderung der Spinnparameter vorgenommen.

Anhand der vorstehend beschrieben Verfahren ergeben sich die in der nachfolgenden Tabelle XVIII dargestellten Fasereigenschaften:

**Tabelle XVIII**

| | Typ1 | Typ2 |
|---|---|---|
| Feinheit (Einzelfilament) | 2,5 dtex | 3,5 dtex |
| Festigkeit | 17,5 cN/tex | 26,3 cN/tex |
| Dehnung | 19 % | 12 % |
| WRV | 108 % | 68 % |
| Kristallinität C_{I} | 48 % | 64 % |

### Beispiel 28 (Recycling EMIM-OAc)

Die Lösung aus Beispiel 1 wird nach einem konventionellen Spinnverfahren (Typ1 Beispiel 19) verarbeitet. Das Koagulationsbad und die Waschbäder werden zusammengeführt. Aus dieser Mischung wird Wasser bis zu einem Restgehalt von 5 Gew.% abdestilliert. Mit dem Rückstand (EMIM-OAc + 5 Gew.% Wasser) wird erneut eine Spinnlösung nach Beispiel 1 hergestellt und erneut nach den Typ 1 Spinnverfahren aus Beispiel 19 verarbeitet. Nach mehrfachem Verfahrenszyklus blieben die Auflösungseigenschaften unverändert, des Weiteren die Filtration, die Spinnbarkeit sowie die Fasereigenschaften.

### Beispiel 29 (Kupfer- und Schwefelbestimmung)

1 g Fasern aus Beispiel 19 wurden mittels ICP-OES Analyse nach Säureaufschluss bezüglich Kupfer- und Schwefelgehalt untersucht. In Tabelle XIX sind die Analysenergebnisse zusammengefasst:

**Tabelle XIX**

| Faser | Schwefel [mg/g] | Kupfer [µg/g] |
|---|---|---|
| Typ 1 | 0,05 | 4,3 |
| Typ 2 | 0,01 | 3,9 |

### Beispiel 30 (Herstellung einer wasserhaltigen Celluloselösung in 1-Ethyl-3-methylimidazolium-diethylchosphat (EMIM-DEP))

Die Ausführung erfolgt wie in Beispiel 1. Die Wasserzugabe beträgt 60 g.

### Beispiel 31 (Herstellung einer wasserhaltigen Celluloselösung in 1-Methyl-3-methylimidazolium-dimethylphosphat (MMIM-DMP))

Die Ausführung erfolgt wie in Beispiel 1. Die Wasserzugabe beträgt 60 g.

### Beispiel 32 (Zumischung eines weiteren protischen Lösemittels)

Die Ausführung erfolgt wie in Beispiel 1. Bei der Zugabe von Wasser wird zusätzlich 10 g Methanol zugegeben.

### Beispiel 33 (Zumischung eines weiteren protischen Lösemittels)

Die Ausführung erfolgt wie in Beispiel 1. Bei der Zugabe von Wasser wird zusätzlich 10 g Isopropanol zugegeben.

### Beispiel 34 (Herstellung einer wasserhaltigen Cellulose-/ Chitosanlösung in 1-Ethyl-3-methylimidazolium-acetat (EMIM-OAc) im Labormixer)

Zu 800g 1-Ethyl-3-methylimidazolium-acetat (EMIM-OAc) werden bei 50 °C mit 100 g Wasser während 5 min unter Rühren zugegeben. Das Lösemittelgemisch wird im Labormixer vorgelegt, auf 70 °C (Lösetemperatur) im Umluftofen thermostatisiert und es werden 80 g Cellulose (BW-Linters DP750) und 20 g Chitosan zugegeben. Es wird 40 s auf Stufe 2 gemixt und für 45 min bei 90 °C im Umluftofen gelagert. Danach wird erneut 40 s auf Stufe 2 gemixt und weitere 45 min auf 90 °C temperiert. Die Cellulose-Chitosanlösung wird in einer Drucknutsche (15 µm Filtergewebe) filtriert. Die Lösung wird bei Raumtemperatur gelagert.

### Beispiel 35 (Herstellung einer wasserhaltigen Cellulose-/ Stärkelösung in 1-Ethyl-3-1-methylimidazolium-acetat (EMIM-OAc) im Labormixer)

Zu 800g Ethyl-3-methylimidazolium-acetat (EMIM-OAc) werden bei 50 °C 60 g Wasser während 5 min unter Rühren zugegeben. Das Lösemittelgemisch wird im Labormixer vorgelegt, auf 60 °C (Lösetemperatur) im Umluftofen thermostatisiert und es werden 80 g Cellulose (BW-Linters DP750) und 20 g Speisestärke zugegeben. Es wird 60 s auf Stufe 2 gemixt und für 45 min bei 80 °C im Umluftofen gelagert. Danach wird erneut 60 s auf Stufe 2 gemixt und weitere 45 min auf 80 °C temperiert. Die Cellulose-Stärkelösung wird in einer Drucknutsche (15µm Filtergewebe) filtriert. Die Lösung wird bei Raumtemperatur gelagert.

### Beispiel 36 (Faserherstellung)

Dieses Beispiel ist eine Ausführung des Beispiels 17. Als Koagulationsbad wird jedoch Ethanol eingesetzt. Die anfallenden Fasern werden in Ethanol ausgewaschen.

### Beispiel 37 (Faserherstellung)

Dieses Beispiel ist eine Ausführung des Beispiels 17. Als Koagulationsbad wird Isopropanol eingesetzt. Die anfallenden Fasern werden in Isopropanol ausgewaschen.

### Beispiel 38 (Herstellung einer wasserhaltigen Celluloselösung in 1-Ethyl-3-methylimidazolium-formiat (EMIM-Formiat))

Zu 4,45 g 1-Ethyl-3-methylimidazolium-formiat (EMIM-Formiat) werden bei 50 °C 0,3 g Wasser während 5 min unter Rühren zugegeben. Das Lösungsmittelgemisch wird im Labormixer vorgelegt und auf 70 °C (Lösetemperatur) im Umluftofen thermostatisiert. Hierzu werden 0,25 g Cellulose (Avicel DP 300) gegeben. Das Gemisch (5 Gew.-% Cellulose, 6 Gew.-% Wasser, 89 Gew.-% EMIM-Formiat) wird 40 s auf Stufe 2 gemixt und für 45 min bei 90 °C im Umluftofen gelagert. Danach wird erneut 40 s auf Stufe 2 gemixt und weitere 45 min auf 90°C temperiert. Die Celluloselösung wird in einer Drucknutsche (15 µm Filtergewebe) filtriert. Die Lösung wird bei Raumtemperatur gelagert.

### Beispiel 39 (Herstellung einer wasserhaltigen Celluloselösung in 1-Ethyl-3-methylimidazolium-propionat (EMIM-Propionat))

Die Ausführung erfolgt wie in Beispiel 38 beschrieben. Anstelle von EMIM-Formiat wird hier EMIM-Propionat herangezogen.

### Beispiel 40 (Herstellung einer wasserhaltigen Celluloselösung in 1-Ethyl-3-methylimidazolium-octanoat (EMIM-Octanoat))

Die Ausführung erfolgt wie in Beispiel 38 beschrieben. Anstelle von EMIM-Formiat wird hier EMIM-Octanoat herangezogen.

### Beispiel 41 (Herstellung einer wasserhaltigen Celluloselösung in 1,3-Diethylimidazolium-acetat (EEIM-Acetat))

Zu 9 g 1,3-Diethylimidazolium-acetat (EEIM-Acetat) werden bei 50 °C 1 g Wasser während 5 min unter Rühren zugegeben. Das Lösungsmittelgemisch wird im Labormixer vorgelegt und auf 70 °C (Lösetemperatur) im Umluftofen thermostatisiert. Hierzu werden 1 g Cellulose (Avicel DP 300) gegeben. Das Gemisch (9,1 Gew.-% Cellulose, 9,1 Gew.-% Wasser, 81,8 Gew.-% EEIM-Acetat) wird 40 s auf Stufe 2 gemixt und für 45 min bei 90 °C im Umluftofen gelagert. Danach wird erneut 40 s auf Stufe 2 gemixt und weitere 45 min auf 90 °C temperiert. Die Celluloselösung wird in einer Drucknutsche (15 µm Filtergewebe) filtriert. Die Lösung wird bei Raumtemperatur gelagert.

### Beispiel 42 (Herstellung einer wasserhaltigen Stärkelösung (Amylopectin aus Mais) in 1-Ethyl-3-methylimidazolium-acetat (EMIM-Acetat))

Zu 50 g 1-Ethyl-3-methylimidazolium-acetat (EMIM-Acetat) werden bei Raumtemperatur 5 g Wasser während 5 min unter Rühren zugegeben. Das Lösungsmittelgemisch wird im Labormixer vorgelegt und auf 100°C (Lösetemperatur) im Umluftofen thermostatisiert. Hierzu werden 5 g Stärke (Herkunft: Amylopectin aus Mais) gegeben. Das Gemisch (8,3 Gew.-% Amylopectin, 8,3 Gew.-% Wasser, 83,3 Gew.-% EMIM-Acetat) wird 40 s auf Stufe 2 gemixt und für 45 min bei 100°C im Umluftofen gelagert. Danach wird erneut 40 s auf Stufe 2 gemixt und weitere 45 min auf 100°C temperiert. Die Stärkelösung wird in einer Drucknutsche (15 µm Filtergewebe) filtriert. Die Lösung wird bei Raumtemperatur gelagert.

Anmerkung zu den Beispielen, bei denen Cellulose nassversponnen wird: Die danach erhaltenen Spinnfasern weisen sämtlich eine Nassfibrillationsnote von weniger als 2 auf.

## Patentansprüche

1. Verfahren zur Herstellung von regenerierter Stärke, regenerierter Cellulose und von regenerierten Derivaten von Stärke und Cellulose, unter Verwendung eines Lösungssystems, das Stärke, Cellulose und/oder Derivate von Stärke und Cellulose enthält, wobei das Lösungssystem auf einer geschmolzenen ionischen Flüssigkeit basiert und ein protisches Lösungsmittel oder ein Gemisch mehrerer protischer Lösungsmittel enthält, wobei für den Fall, dass das protische Lösungsmittel allein Wasser ist, dieses in dem Lösungssystem in einer Menge von mehr als 5 Gew.-% vorliegt, und wobei das Lösungssystem das protische Lösungsmittel, mit Ausnahme von Wasser, in einer Menge von mindestens 0,1 Gew.-% enthält, und das Lösungssystem als protische Lösungsmittel Methanol, Ethanol, 1-Propanol, 2-Propanol und/oder 1-Butanol, gegebenenfalls in Vermischung mit Wasser, enthält, wobei das Lösungssystem in ein Koagulationsmedium überführt wird, in dem sich ein Lösungsmittel befindet, das die Stärke, Cellulose und/oder Derivate von Stärke und Cellulose nicht löst und mit der geschmolzenen ionischen Flüssigkeit mischbar ist.

2. Verfahren nach Anspruch 1, **dadurch gekennzeichnet, dass** die ionische Flüssigkeit als Kation ein substituiertes oder unsubstituiertes Imidazolium-Kation enthält.

3. Verfahren nach einem der Ansprüche 1 bis 2 **dadurch gekennzeichnet, dass** das Lösungssystem 6 bis 15 Gew.-% Wasser als protisches Lösungsmittel enthält.

4. Verfahren nach Anspruch 1, **dadurch gekennzeichnet, dass** das Lösungssystem das protische Lösungsmittel in einer Menge von etwa 1 bis 10 Gew.-% enthält.

5. Verfahren nach mindestens einem der Ansprüche 2 bis 4, **dadurch gekennzeichnet, dass** das Imidazolium-Kation der ionischen Flüssigkeit in der 1- sowie 3-Stellung oder in der 1-, 2- sowie 3-Stellung mit (C₁-C₆)-Alkylgruppen substituiert ist.

6. Verfahren nach Anspruch 5, **dadurch gekennzeichnet, dass** das Imidazolium-Kation das 1-Ethyl-3-methylimidazolium-, 1,3-Dimethylimidazolium- oder das 1-Butyl-3-methylimidazolium-Kation ist.

7. Verfahren nach mindestens einem der Ansprüche 1 bis 6, **dadurch gekennzeichnet, dass** das Anion der ionischen Flüssigkeit ein Halogenid-, Perchlorat-, Pseudohalogenid-, Sulfat-, Phosphat-, Alkylphosphat- oder ein C₁-C₆-Carboxylat-Ion ist.

8. Verfahren nach mindestens einem der vorhergehenden Ansprüche, **dadurch gekennzeichnet, dass** die geschmolzene ionische Flüssigkeit einen Schmelzpunkt von -100 bis +150 C° aufweist.

9. Verfahren nach mindestens einem der vorhergehenden Ansprüche, **dadurch gekennzeichnet, dass** die ionische Flüssigkeit vorliegt als 1-Ethyl-3-methylimidazolium-acetat, 1,3-Dimethylimidazolium-acetat, 1-Ethyl-3-methylimidazolium-chlorid, 1-Butyl-3-methylimidazolium-acetat, 1-Ethyl-3-methylimidazolium-diethylphosphat, 1-Methyl-3-methylimidazolium-dimethylphosphat, 1-Ethyl-3-methylimidazolium-formiat, 1-Ethyl-3-methylimidazolium-octanoat, 1,3-Diethylimidazolium-acetat und 1-Ethyl-3-methylimidazoliumpropionat.

10. Verfahren nach mindestens einem der vorhergehenden Ansprüche, **dadurch gekennzeichnet, dass** die im Lösungssystem gelöste Cellulose bzw. deren Derivat einen durchschnittlichen Polymerisationsgrad von etwa 200 bis 3500 aufweisen und die Cellulose und/oder deren Derivate in dem Lösungsmittelsystem in einer Menge von etwa 1 bis 35 Gew.-% vorliegen.

11. Verfahren nach mindestens einem der vorhergehenden Ansprüche, **dadurch gekennzeichnet, dass** als Derivate der Stärke und der Cellulose Ester oder Ether eingesetzt werden.

12. Verfahren nach mindestens einem der vorhergehenden Ansprüche, **dadurch gekennzeichnet, dass** das Lösungssystem eine Nullviskosität (gemessen mit einem Rotationsviskosimeter) zwischen etwa 5 und 150000 Pa.s aufweist.

13. Verfahren nach mindestens einem der vorhergehenden Ansprüche, **dadurch gekennzeichnet, dass** das Lösungssystem nassversponnen wird.

14. Verfahren nach mindestens einem der vorhergehenden Ansprüche, **dadurch gekennzeichnet, dass** das die Stärke, Cellulose und/oder Derivate von Stärke und Cellulose enthaltende Lösungssystem als Spinnlösung zur Herstellung nicht fibrillierender Fasern eingesetzt wird.

15. Verfahren nach Anspruch 13 oder 14, **dadurch gekennzeichnet, dass** eine Luftspalt-Spinnanlage eingesetzt wird, um Stapelfasern hohen Kristallisationsgrades (KI > 0,5) zu erhalten.

16. Verfahren nach mindestens einem der vorhergehenden Ansprüche, **dadurch gekennzeichnet, dass** zur Einstellung spezieller Eigenschaften gewonnenen ausgefällten Fasermaterials Additive hinzugefügt werden, wobei die Additive dem Koagulationsmedium, dem Lösungssystem und/oder einem nachfolgenden Modifizierungsbad zugefügt werden.

17. Verfahren nach Anspruch 16, **dadurch gekennzeichnet, dass** Additive in Form von Mikrokapseln, Porenbildnern, Weichmachern, Mattierungsmitteln, Flammschutzmitteln, Bakteriziden, Vernetzungsmitteln, Hydrophobiermitteln, Antistatika und/oder Farbmitteln herangezogen werden.

18. Verfahren nach mindestens einem der vorhergehenden Ansprüche, **dadurch gekennzeichnet, dass** ein Alkohol, ein Gemisch von Alkoholen oder ein Gemisch von Alkohol(en) mit Wasser oder allein Wasser als Fäll- bzw. Koagulationsmedium herangezogen wird und keine Additive zugesetzt werden.

19. Verfahren nach Anspruch 18, **dadurch gekennzeichnet, dass** als Alkohol Methanol, Ethanol, Propanol und/oder Butanol eingesetzt wird.

20. Verfahren nach mindestens einem der vorhergehenden Ansprüche, **dadurch gekennzeichnet, dass** die im Koagulationsmedium, insbesondere in Wasser, ausgefällt Stärke, Cellulose und/oder Derivate von Stärke und Cellulose, abgetrennt und die verbleibende flüssige Phase, gegebenenfalls nach teilweisem Eindampfen, zur Herstellung des ursprünglichen Lösungsmittelsystems zurückgewonnen und wieder zur Herstellung des die Stärke, Cellulose und/oder Derivate von Stärke und Cellulose enthaltenden Lösungssystems eingesetzt wird.

## Claims

1. A process for the preparation of regenerated starch, regenerated cellulose and of regenerated derivatives of starch and cellulose, using a solution system containing starch, cellulose and/or derivatives of starch and cellulose, wherein the solution system is based on a molten ionic liquid and contains a protic solvent or a mixture of several protic solvents, wherein, in the case where the protic solvent is solely water, this is present in the solution system in an amount of more than 5 wt.%, and wherein the solution system contains the protic solvent, with the exception of water, in an amount of at least 0.1 wt.%, and the solution system contains as the protic solvent methanol, ethanol, 1-propanol, 2-propanol and/or 1-butanol, optionally mixed with water, wherein the solution system is converted into a coagulation medium in which a solvent is present which does not dissolve the starch, cellulose and/or derivatives of starch and cellulose and is miscible with the molten ionic liquid.

2. The process according to claim 1, wherein the ionic liquid contains a substituted or unsubstituted imidazolium cation as the cation.

3. The process according to claim 1 or 2, wherein the solution system contains 6 to 15 wt.% of water as the protic solvent.

4. The process according to claim 1, wherein the solution system contains the protic solvent in an amount of from about 1 to 10 wt.%.

5. The process according to at least one of claims 2 to 4, wherein the imidazolium cation of the ionic liquid is substituted by (C₁-C₆)-alkyl groups in the 1- and 3-position or in the 1-, 2- and 3-position.

6. The process according to claim 5, wherein the imidazolium cation is the 1-ethyl-3-methylimidazolium, 1,3-dimethylimidazolium or the 1-butyl-3-methylimidazolium cation.

7. The process according to at least one of claims 1 to 6, wherein the anion of the ionic liquid is a halide, perchlorate, pseudohalide, sulfate, phosphate, alkyl-phosphate or a C₁-C₆-carboxylate ion.

8. The process according to at least one of the preceding claims, wherein the molten ionic liquid has a melting point of from -100 to +150°C.

9. The process according to at least one of the preceding claims, wherein the ionic liquid is present as 1-ethyl-3-methylimidazolium acetate, 1,3-dimethylimidazolium acetate, 1-ethyl-3-methylimidazolium chloride, 1-butyl-3-methylimidazolium acetate, 1-ethyl-3-methylimidazolium diethylphosphate, 1-methyl-3-methylimidazolium dimethylphosphate, 1-ethyl-3-methylimidazolium formate, 1-ethyl-3-methylimidazolium octanoate, 1,3-diethylimidazolium acetate and 1-ethyl-3-methylimidazolium propionate.

10. The process according to at least one of the preceding claims, wherein the cellulose dissolved in the solution system or derivative thereof has an average degree of polymerization of from about 200 to 3500 and the cellulose and/or derivatives thereof are present in the solution system in an amount of from about 1 to 35 wt.%.

11. The process according to at least one of the preceding claims, wherein esters or ethers are used as derivatives of the starch and the cellulose.

12. The process according to at least one of the preceding claims, wherein the solution system has a zero viscosity (measured with a rotary viscometer) of between about 5 and 150 000 Pa.s.

13. The process according to at least one of the preceding claims, wherein the solution system is subjected to wet spinning.

14. The process according to at least one of the preceding claims, wherein the solution system containing the starch, cellulose and/or derivatives of starch and cellulose is used as a spinning solution for the production of non-fibrillating fibers.

15. The process according to claim 13 or 14, wherein an air gap spinning unit is employed in order to obtain staple fibers having a high degree of crystallinity (CI > 0.5).

16. The process according to at least one of the preceding claims, wherein to adjust specific properties of the precipitated fiber material obtained, additives are added, the additives being added to the coagulation medium, the solution system and/or a subsequent modification bath.

17. The process according to claim 16, wherein additives in the form of microcapsules, pore-forming agents, plasticizers, matting agents, flameproofing agents, bactericides, crosslinking agents, hydrophobizing agents, antistatics and/or coloring agents are used.

18. The process according to at least one of the preceding claims, wherein an alcohol, a mixture of alcohols or a mixture of alcohol(s) with water or solely water is used as the precipitating or coagulation medium and no additives are added.

19. The process according to claim 18, wherein methanol, ethanol, propanol and/or butanol is used as the alcohol.

20. The process according to at least one of the preceding claims, wherein the starch, cellulose and/or derivatives of starch and cellulose precipitated out in the coagulation medium, in particular in water, are separated off and the liquid phase which remains is recovered, optionally after partial evaporation, for the preparation of the original solution system and is employed again for the preparation of the solution system containing the starch, cellulose and/or derivatives of starch and cellulose.

## Revendications

1. Procédé de préparation d'amidon régénéré, de cellulose régénérée et de dérivés régénérés de l'amidon et de la cellulose, par utilisation d'un système de dissolution contenant de l'amidon, de la cellulose et/ou des dérivés de l'amidon et de la cellulose, le système de dissolution étant à base d'un liquide ionique fondu et contenant un solvant protique ou un mélange de plusieurs solvants protiques ; où, dans le cas dans lequel le solvant protique est uniquement l'eau, cette dernière est présente dans le système de dissolution en une quantité supérieure à 5 % en poids, et le système de dissolution contenant le solvant protique, à l'exception de l'eau, en une quantité d'au moins 0,1 % en poids, et le système de dissolution contenant, en tant que solvant protique, du méthanol, de l'éthanol, du 1-propanol, du 2-propanol et/ou du 1-butanol, éventuellement en mélange avec de l'eau, le système de dissolution étant converti en un milieu de coagulation dans lequel se trouve un solvant qui ne dissout pas l'amidon, la cellulose et/ou les dérivés de l'amidon et de la cellulose, et qui est miscible au liquide ionique fondu.

2. Procédé selon la revendication 1, **caractérisé en ce que** le liquide ionique contient en tant que cation un cation imidazolium substitué ou non substitué.

3. Procédé selon l'une des revendications 1 et 2, **caractérisé en ce que** le système de dissolution contient de 6 à 15 % en poids d'eau en tant que solvant protique.

4. Procédé selon la revendication 1, **caractérisé en ce que** le système de dissolution contient le solvant protique en une quantité d'environ 1 à 10 % en poids.

5. Procédé selon au moins l'une des revendications 2 à 4, **caractérisé en ce que** le cation imidazolium du liquide ionique est substitué en position 1 et en position 3, ou en positions 1, 2 et aussi 3, par des groupes alkyle en C₁-C₆.

6. Procédé selon la revendication 5, **caractérisé en ce que** le cation imidazolium est le cation 1-éthyl-3-méthylimidazolium, 1,3-diméthylimidazolium ou 1-butyl-3-méthylimidazolium.

7. Procédé selon au moins l'une des revendications 1 à 6, **caractérisé en ce que** l'anion du liquide ionique est un ion halogénure, perchlorate, pseudo-halogénure, sulfate, phosphate, alkylphosphate, ou carboxylate en C₁-C₆.

8. Procédé selon au moins l'une des revendications précédentes, **caractérisé en ce que** le liquide ionique fondu présente un point de fusion de -100 à +150°C.

9. Procédé selon au moins l'une des revendications précédentes, **caractérisé en ce que** le liquide ionique est présent en tant qu'acétate de 1-éthyl-3-méthylimidazolium, acétate de 1,3-diméthylimidazolium, chlorure de 1-éthyl-3-méthylimidazolium, acétate de 1-butyl-3-méthylimidazolium, diéthylphosphate de 1-éthyl-3-méthylimidazolium, diméthylphosphate de 1-méthyl-3-méthylimidazolium, formiate de 1-éthyl-3-méthylimidazolium, octanoate de 1-éthyl-3-méthylimidazolium, acétate de 1,3-diéthylimidazolium et propionate de 1-éthyl-3-méthylimidazolium.

10. Procédé selon au moins l'une des revendications précédentes, **caractérisé en ce que** la cellulose ou son dérivé dissous dans le système de dissolution présente un degré moyen de polymérisation d'environ 200 à 3 500, et la cellulose et/ou ses dérivés sont présents dans le système de dissolution en une quantité d'environ 1 à 35 % en poids.

11. Procédé selon au moins l'une des revendications précédentes, **caractérisé en ce qu'**on utilise en tant que dérivés de l'amidon ou de la cellulose des esters ou des éthers.

12. Procédé selon au moins l'une des revendications précédentes, **caractérisé en ce que** le système de dissolution a une viscosité à cisaillement nul (mesurée au viscosimètre rotatif) comprise entre environ 5 et 150 000 Pa.s.

13. Procédé selon au moins l'une des revendications précédentes, **caractérisé en ce que** le système de dissolution est filé au mouillé.

14. Procédé selon au moins l'une des revendications précédentes, **caractérisé en ce que** le système de dissolution contenant l'amidon, la cellulose et/ou les dérivés de l'amidon et de la cellulose est utilisé en tant que solution de filage pour fabriquer des fibres non fibrillantes.

15. Procédé selon la revendication 13 ou 14, **caractérisé en ce qu'**on utilise une installation de filage à fente d'aération, pour obtenir des fibres coupées ayant un degré élevé de cristallisation (KI > 0, 5) .

16. Procédé selon au moins l'une des revendications précédentes, **caractérisé en ce que**, pour ajuster des propriétés spéciales, on ajoute des additifs aux matériaux fibreux précipités obtenus, les additifs étant ajoutés au milieu de coagulation, au milieu de dissolution et/ou à un bain de modification ultérieur.

17. Procédé selon la revendication 16, **caractérisé en ce que** les additifs sont ajoutés sous forme de microcapsules, d'agents porogènes, de plastifiants, d'agents de matité, d'agents d'ignifugation, de bactéricides, d'agents de réticulation, d'agents d'hydrophobisation, d'antistatiques et/ou de substances colorantes.

18. Procédé selon au moins l'une des revendications précédentes, **caractérisé en ce qu'**on ajoute en tant que milieu de précipitation ou de coagulation un alcool, un mélange d'alcools ou un mélange d'un ou plusieurs alcools et d'eau, ou seulement de l'eau, aucun additif n'étant ajouté.

19. Procédé selon la revendication 18, **caractérisé en ce qu'**on utilise en tant qu'alcool du méthanol, de l'éthanol, du propanol et/ou du butanol.

20. Procédé selon au moins l'une des revendications précédentes, **caractérisé en ce que** l'amidon, la cellulose et/ou les dérivés de l'amidon et de la cellulose, précipités dans le milieu de coagulation, en particulier dans l'eau, sont séparés, et la phase liquide restante, éventuellement après évaporation partielle, est récupérée pour la préparation du système solvant initial, et est réutilisée pour fabriquer la solution de dissolution contenant l'amidon, la cellulose et/ou les dérivés de l'amidon et de la cellulose.
